(19) Europäisches Patentamt
European Patent Office
Office européen des brevets

(11) **EP 4 759 773 A1**

(12) **EUROPEAN PATENT APPLICATION**
published in accordance with Art. 153(4) EPC


(43) Date of publication:
**17.06.2026 Bulletin 2026/25**

(21) Application number: **23948315.9**

(22) Date of filing: **26.12.2023**

(51) International Patent Classification (IPC):
***C01B 39/04*** *(2006.01)* ***B01J 20/18*** *(2006.01)*
***B01J 29/06*** *(2006.01)* ***B01J 29/70*** *(2006.01)*

(52) Cooperative Patent Classification (CPC):
**B01J 20/18; B01J 29/06; B01J 29/70; C01B 39/04**

(86) International application number:
**PCT/CN2023/141734**

(87) International publication number:
**WO 2025/030754 (13.02.2025 Gazette 2025/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.08.2023 CN 202311000137**



(71) Applicants:
- **China Petroleum & Chemical Corporation**
  **Beijing 100728 (CN)**
- **Sinopec (Shangai) Research Institute of Petrochemical Technology Co., Ltd.**
  **Shanghai 201208 (CN)**

(72) Inventors:
- **YANG, Weimin**
  **Shanghai 201208 (CN)**
- **FU, Wenhua**
  **Shanghai 201208 (CN)**
- **LUO, Yi**
  **Shanghai 201208 (CN)**
- **ZOU, Xiaodong**
  **106 91, Stockholm (SE)**
- **WANG, Zhendong**
  **Shanghai 201208 (CN)**
- **YUAN, Zhiqing**
  **Shanghai 201208 (CN)**

(74) Representative: **Hoffmann Eitle**
**Patent- und Rechtsanwälte PartmbB**
**Arabellastraße 30**
**81925 München (DE)**


(54) **SCM-41 MOLECULAR SIEVE, PREPARATION METHOD THEREFOR, AND USE THEREOF**


(57) The present invention discloses a novel silicon-germanium molecular sieve SCM-41, a preparation method thereof, and use thereof. The SCM-41 molecular sieve has a unique X-ray diffraction pattern and shows good application prospects in terms of adsorption separation and catalytic conversion of organic compounds.


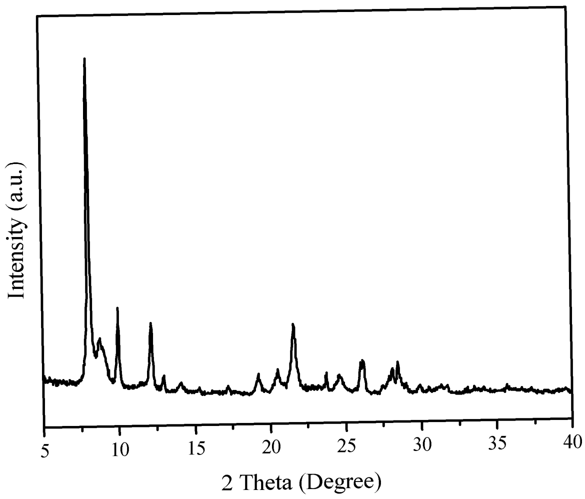


Figure 5A

EP 4 759 773 A1

## Description

### TECHNICAL FIELD

The present application belongs to the technical field of molecular sieves, and specifically relates to a silicon-germanium molecular sieve SCM-41, a preparation method thereof and use thereof.

### BACKGROUND ART

Molecular sieves are an important class of microporous crystalline materials, possessing regularly ordered molecular-scale channel structures, tunable chemical compositions, relatively strong acidity, and high hydrothermal stability. Currently, they are widely used in fields such as catalysis, adsorption, and ion exchange. The excellent performance of molecular sieves is highly dependent on their framework structure. Therefore, the synthesis of molecular sieves with special framework structures has always been one of the most important research directions in the field of molecular sieves.

To date, more than 250 molecular sieves with novel framework structures have been discovered. The framework structure of molecular sieves is typically formed by coordination tetrahedra ($TO_4$) connected through shared vertices (generally oxygen atoms). Among them, the tetrahedra in the framework structure of zeolite molecular sieves are $SiO_4$ tetrahedra and $AlO_4$ tetrahedra. These two types of tetrahedra in zeolite molecular sieves can be replaced by other types of tetrahedra, forming molecular sieves or molecular sieve-like materials with different framework structures. For example, $AlO_4$ tetrahedra can be replaced by $GaO_4$ or $ZnO_4$ tetrahedra, which together with $SiO_4$ tetrahedra constitute the framework of heteroatom molecular sieves; while Ge has coordination properties similar to Si and can also form tetrahedrally coordinated structures. The connection of $GeO_4$ and $SiO_4$ can form numerous novel germanium-containing molecular sieves or molecular sieve-like structures.

So far, no material with the same X-ray diffraction crystal structure as the SCM-41 molecular sieve disclosed in the present application has been found.

### SUMMARY

The objective of the present application is to provide a novel silicon-germanium molecular sieve SCM-41, a preparation method thereof and use thereof. The molecular sieve has a novel framework structure and a unique X-ray diffraction pattern, and can be used as an adsorbent, a catalyst, or an active component thereof.

To achieve the above objective, in one aspect, the present application provides a silicon-germanium molecular sieve, wherein the molecular sieve has an X-ray diffraction pattern exhibiting X-ray diffraction peaks as shown in the table below:

| 2θ (°) | d-spacing (Å) |
|---|---|
| 8.15 ±0.3 | 10.91 ±0.40 |
| 10.06 ±0.3 | 8.83 ±0.30 |
| 12.27 ±0.3 | 7.24 ±0.25 |
| 15.38 ±0.3 | 5.78 ±0.20 |
| 19.29 ±0.3 | 4.61 ±0.15 |
| 20.55 ±0.3 | 4.33 ±0.10 |
| 21.64 ±0.3 | 4.11 ±0.10 |

Preferably, the silicon-germanium molecular sieve exhibits X-ray diffraction peaks as shown in the table below:

| 2θ (°) | d-spacing (Å) |
|---|---|
| 8.15 ±0.3 | 10.91 ±0.40 |
| 10.06 ±0.3 | 8.83 ±0.30 |
| 12.27 ±0.3 | 7.24 ±0.25 |
| 13.05 ±0.3 | 6.68 ±0.25 |

(continued)

| 2θ (°) | d-spacing (Å) |
|---|---|
| 15.38 ±0.3 | 5.78 ±0.20 |
| 19.29 ±0.3 | 4.61 ±0.15 |
| 20.55 ±0.3 | 4.33 ±0.10 |
| 21.64 ±0.3 | 4.11 ±0.10 |

Preferably, the molecular sieve further comprises an additional element X selected from boron, aluminum, gallium, titanium, zirconium, hafnium, tin, zinc, iron, chromium, indium, or a combination thereof.

In another aspect, a method for preparing the silicon-germanium molecular sieve of the present application is provided, comprising steps of mixing a silicon source, a germanium source, a fluorine source, an organic template Q, water, and optionally an additional element X source; subjecting to a crystallization reaction; and optionally calcining, to obtain the silicon-germanium molecular sieve, wherein the organic template Q comprises or consists of 1-[bis[3-(dimethylamino)propyl]amino]-2-propanol.

In still another aspect, a molecular sieve composition is provided, comprising the silicon-germanium molecular sieve of the present application, and an active component and/or a binder.

In yet another aspect, use of the molecular sieve or molecular sieve composition of the present application as an adsorbent or a catalyst is provided.

The silicon-germanium molecular sieve SCM-41 of the present application has a completely new framework structure, which has never been obtained in the art before. The SCM-41 molecular sieve possesses a regular molecular-sized channel structure, relatively strong acidity, ion exchange properties, and high thermal stability, exhibiting good application prospects in terms of adsorption separation and catalytic conversion of organic compounds.

The method for preparing the SCM-41 molecular sieve of the present application has simple synthesis steps, strong operability, a broad synthesis scope, and is easy to promote.

## BRIEF DESCRIPTION OF THE DRAWINGS

Figure 1 is a schematic diagram (a) of a set of natural tiles in the framework of the SCM-41 molecular sieve obtained in Example 1 and its tilling structure (b);
Figure 2 is a schematic diagram (a) of another set of natural tiles in the framework of the SCM-41 molecular sieve obtained in Example 1 and its tilling structure (b);
Figure 3 is a projection diagram in different directions of one framework structure of the SCM-41 molecular sieve obtained in Example 1;
Figure 4 is a projection diagram in different directions of another framework structure of the SCM-41 molecular sieve obtained in Example 1;
Figure 5A and 5B are X-ray diffraction (XRD) patterns of the SCM-41 molecular sieve and the as-synthesized molecular sieve obtained in Example 1, respectively;
Figure 6 is a scanning electron microscope (SEM) image of the SCM-41 molecular sieve obtained in Example 1;
Figure 7 is a nitrogen adsorption-desorption isotherm of the SCM-41 molecular sieve obtained in Example 1;
Figure 8A and 8B are XRD patterns of the SCM-41 molecular sieve and the as-synthesized molecular sieve obtained in Example 2, respectively;
Figure 9 is an SEM image of the SCM-41 molecular sieve obtained in Example 2;
Figure 10 is a nitrogen adsorption-desorption isotherm of the SCM-41 molecular sieve obtained in Example 2; and
Figure 11 is the XRD pattern of the BEC molecular sieve obtained in Comparative Example 1.

## DETAILED DESCRIPTION

The specific embodiments of the present application are described in detail below. It should be understood that the specific embodiments described herein are for illustrating and explaining the present application only and are not intended to limit the present application.

Any specific numerical value disclosed herein (including endpoints of numerical ranges) is not limited to the precise value of that numerical value but should be understood to also encompass values close to that precise value, such as all possible numerical values within ±5% of the precise value. Moreover, for the disclosed numerical ranges, one or

more new numerical ranges can be arbitrarily formed by combination between the endpoint values, between endpoint values and specific point values within the range, and between each specific point values. These new numerical ranges should also be considered specifically disclosed herein.

Unless otherwise specified, the terms used herein have the same meanings as commonly understood by those skilled in the art. If a term is defined herein and its definition differs from the common understanding in the art, the definition herein shall prevail.

In the context of the present specification, the term "specific surface area" refers to the total area per unit mass of a sample, including the internal surface area and the external surface area. Non-porous samples only have an external surface area, such as portland cement, some clay mineral powders, etc.; perforated and porous samples have both external and internal surface areas, such as asbestos fibers, diatomaceous earth, molecular sieves and the like. In perforated and porous samples, the surface area of pores with diameters less than 2 nm is the internal surface area. The surface area after subtracting the internal surface area is called the external surface area. The external surface area per unit mass of the sample is the external specific surface area.

In the context of the present specification, the term "$SiO_2/GeO_2$ molar ratio" refers to the molar ratio between silicon calculated as $SiO_2$ and germanium calculated as $GeO_2$ in the molecular sieve.

In the context of the present specification, the term "calculated as oxide" means calculated in the form of the oxide with the highest valence that can stably exist for the corresponding element. For example, the expression "calculated as oxide" for silicon means calculated as $SiO_2$, for germanium as $GeO_2$, for aluminum as $Al_2O_3$; for titanium as $TiO_2$, for boron as $B_2O_3$, for zirconium as $ZrO_2$, for tin as $SnO_2$, for iron as $Fe_2O_3$.

In the context of the present specification, the terms "as-synthesized", "as-synthesized form", or "as-synthesized molecular sieve" refer to the state of the molecular sieve after the synthesis step ends and before the posttreatment step (such as calcination step) begins. As specific examples of the as-synthesized state, it can be the state directly presented after the synthesis step ends. In view of this, in the as-synthesized state, the molecular sieve may contain water and/or organic matter (especially organic template).

In the context of the present specification, the terms "calcined", "calcined form", or "calcined molecular sieve" refer to the state of the molecular sieve after calcination. As specific examples of the calcined state, it can be the state presented after the as-synthesized molecular sieve is further calcined to remove any organic matter (especially organic template) and water, etc., that may exist in its pores.

In the context of the present specification, in the XRD data of molecular sieves, symbols such as vw, w, m, s, and vs represent the relative intensity $I/I_0$ of the diffraction peak at the corresponding $2\theta$ angle with respect to the strongest diffraction peak (i.e., the diffraction peak with the largest intensity) calculated based on the diffraction peak intensity (measured by peak height), wherein I represents the peak intensity of the corresponding diffraction peak and $I_0$ represents the peak intensity of the strongest diffraction peak, vw represents very weak, w represents weak, m represents medium, s represents strong, and vs represents very strong. This representation is well-known to those skilled in the art. Generally, vw represents less than 5, w represents 5-20 (excluding 20); m represents 20-40 (excluding 40); s represents 40-70 (excluding 70); vs represents greater than or equal to 70.

According to the present application, the d-spacing for each diffraction peak in the XRD pattern of the molecular sieve can be calculated from the $2\theta$ value of the diffraction peak using Bragg's law: $\lambda=2d \sin\theta$ (wherein $\lambda$ is the wavelength of the incident wave, $\lambda$=1.54 Å, d is the d-spacing, $\theta$ is the angle between the incident light and the scattering plane).

In the context of the present specification, the term "pore volume" refers to the volume of pores per unit mass of the molecular sieve. The term "total pore volume" refers to the volume of all pores per unit mass of the molecular sieve (generally only including pores with diameters less than 50 nm). The term "micropore volume" refers to the volume of all micropores (generally referring to pores with diameters less than 2 nm) per unit mass of the molecular sieve.

In the present application, pore structure parameters of the molecular sieve material, such as: total pore volume, micropore volume, and specific surface area, are obtained by measuring the nitrogen physical adsorption-desorption isotherm of the molecular sieve using a physical adsorption instrument, and then calculating based on the BET (Brunauer-Emmett-Teller) method and the t-plot method. The total pore volume is taken as the pore volume corresponding to a relative pressure $P/P_0$=0.99. The specific testing and calculation methods are well known to those skilled in the art.

In the present application, the contents of Si, Ge, and element X in the molecular sieve are determined by inductively coupled plasma-atomic emission spectroscopy (ICP-AES), while the contents of F, organic template, and water are determined by thermogravimetric analysis.

In the present application, except for the explicitly described content, any matters or items not mentioned are directly applicable to those known in the art without any change. Moreover, any embodiment described herein can be freely combined with one or more other embodiments described herein, the technical solutions or technical ideas thus formed are regarded as part of the original disclosure or original record of the present application and should not be regarded as new content not disclosed or anticipated herein, unless such combination is considered obviously unreasonable by those skilled in the art.

All patents and non-patent literature cited herein, including but not limited to textbooks and journal articles, are

incorporated herein by reference in their entirety.

As described above, a first aspect of the present application provides a silicon-germanium molecular sieve, wherein the molecular sieve has an X-ray diffraction pattern exhibiting X-ray diffraction peaks as shown in the table below:

| 2θ (°) | d-spacing (Å) |
|---|---|
| 8.15 ±0.3 | 10.91 ±0.40 |
| 10.06 ±0.3 | 8.83 ±0.30 |
| 12.27 ±0.3 | 7.24 ±0.25 |
| 15.38 ±0.3 | 5.78 ±0.20 |
| 19.29 ±0.3 | 4.61 ±0.15 |
| 20.55 ±0.3 | 4.33 ±0.10 |
| 21.64 ±0.3 | 4.11 ±0.10 |

In certain preferred embodiments, the silicon-germanium molecular sieve exhibits X-ray diffraction peaks as shown in the table below:

| 2θ (°) | d-spacing (Å) |
|---|---|
| 8.15 ±0.3 | 10.91 ±0.40 |
| 10.06 ±0.3 | 8.83 ±0.30 |
| 12.27 ±0.3 | 7.24 ±0.25 |
| 13.05 ±0.3 | 6.68 ±0.25 |
| 15.38 ±0.3 | 5.78 ±0.20 |
| 19.29 ±0.3 | 4.61 ±0.15 |
| 20.55 ±0.3 | 4.33 ±0.10 |
| 21.64 ±0.3 | 4.11 ±0.10 |

. In such preferred embodiments, the silicon-germanium molecular sieve is a calcined silicon-germanium molecular sieve, also referred to as the SCM-41 molecular sieve in the present application.

In certain further preferred embodiments, the X-ray diffraction pattern of the SCM-41 molecular sieve further exhibits one or more X-ray diffraction peaks as shown in the table below:

| 2θ (°) | d-spacing (Å) |
|---|---|
| 8.78 ±0.3 | 10.12 ±0.35 |
| 11.53 ±0.3 | 7.70 ±0.30 |
| 14.19 ±0.3 | 6.26 ±0.20 |
| 16.35 ±0.3 | 5.43 ±0.20 |
| 17.34 ±0.3 | 5.12 ±0.15 |
| 23.22 ±0.3 | 3.84 ±0.08 |

In certain further preferred embodiments, the X-ray diffraction pattern of the SCM-41 molecular sieve further exhibits one or more X-ray diffraction peaks as shown in the table below:

| 2θ (°) | d-spacing (Å) |
|---|---|
| 23.86 ±0.3 | 3.73 ±0.08 |
| 24.74 ±0.3 | 3.60 ±0.05 |

(continued)

| 2θ (°) | d-spacing (Å) |
|---|---|
| 26.22 ±0.3 | 3.40 ±0.05 |
| 28.15 ±0.3 | 3.17 ±0.03 |
| 28.60 ±0.3 | 3.12 ±0.03 |
| 30.04 ±0.3 | 2.98 ±0.03 |

In certain further preferred embodiments, the X-ray diffraction pattern of the SCM-41 molecular sieve exhibits relative intensity characteristics of diffraction peaks as shown in the table below:

| 2θ (°) | d-spacing (Å) | Relative Intensity $(I/I_0)\times 100$ |
|---|---|---|
| 8.15 ±0.3 | 10.91 ±0.40 | vs |
| 10.06 ±0.3 | 8.83 ±0.30 | w-m |
| 12.27 ±0.3 | 7.24 ±0.25 | w-s |
| 13.05 ±0.3 | 6.68 ±0.25 | vw-w |
| 15.38 ±0.3 | 5.78 ±0.20 | vw-w |
| 19.29 ±0.3 | 4.61 ±0.15 | vw-w |
| 20.55 ±0.3 | 4.33 ±0.10 | vw-w |
| 21.64 ±0.3 | 4.11 ±0.10 | w-m |

In certain even more preferred embodiments, the X-ray diffraction pattern of the SCM-41 molecular sieve further exhibits relative intensity characteristics of diffraction peaks as shown in any one or more rows of the table below:

| 2θ (°) | d-spacing (Å) | Relative Intensity $(I/I_0)\times 100$ |
|---|---|---|
| 8.78 ±0.3 | 10.12 ±0.35 | w-m |
| 11.53 ±0.3 | 7.70 ±0.30 | vw-w |
| 14.19 ±0.3 | 6.26 ±0.20 | vw-w |
| 16.35 ±0.3 | 5.43 ±0.20 | vw-w |
| 17.34 ±0.3 | 5.12 ±0.15 | vw-w |
| 23.22 ±0.3 | 3.84 ±0.08 | vw-w |

In certain even more preferred embodiments, the X-ray diffraction pattern of the SCM-41 molecular sieve further exhibits relative intensity characteristics of diffraction peaks as shown in any one or more rows of the table below:

| 2θ (°) | d-spacing (Å) | Relative Intensity $(I/I_0)\times 100$ |
|---|---|---|
| 23.86 ±0.3 | 3.73 ±0.08 | vw-w |
| 24.74 ±0.3 | 3.60 ±0.05 | vw-w |
| 26.22 ±0.3 | 3.40 ±0.05 | vw-w |
| 28.15 ±0.3 | 3.17 ±0.03 | vw-w |
| 28.60 ±0.3 | 3.12 ±0.03 | vw-w |
| 30.04 ±0.3 | 2.98 ±0.03 | vw-w |

In certain further preferred embodiments, the SCM-41 molecular sieve has a framework topology comprising natural tiles of $[4^6]$, $[4^4.6^2]$, $[4^2.5^4]$, $[4^2.5^4.6^2]$, $[4^7.5^6.6^9.10^4]$, as shown in Figure 1a.

In certain even more preferred embodiments, the SCM-41 molecular sieve has a framework topology with a minimum repeating unit which may be composed of 2 [$4^6$], 2 [$4^4.6^2$], 2 [$4^2.5^4$], 1 [$4^2.5^4.6^2$], 2 [$4^7.5^6.6^9.10^4$] natural tiles, as shown in Figure 1b.

In other further preferred embodiments, the SCM-41 molecular sieve has a framework topology comprising natural tiles of [$4^6$], [$4^4.6^2$], [$4^2.5^4$], [$4^2.6^4$], [$4^{14}.5^8.6^{16}.10^8$], as shown in Figure 2a.

In certain more specific embodiments, the SCM-41 molecular sieve has a framework topology with a minimum repeating unit which may be composed of 2 [$4^6$], 2 [$4^4.6^2$], 2 [$4^2.5^4$], 1 [$4^2.6^4$], 2 [$4^{14}.5^8.6^{16}.10^8$] natural tiles, as shown in Figure 2b.

In certain further preferred embodiments, the SCM-41 molecular sieve has intersecting straight channels with 10-membered ring openings along the crystal [010] and [110] directions.

In certain even more preferred embodiments, the straight channels with 10-membered ring openings of the SCM-41 molecular sieve have a planar projection in shape of ellipse. For example, the major axis of the ellipse may be 6.0-7.0 Å, preferably 6.1-6.9 Å, more preferably 6.2-6.8 Å; and/or the minor axis of the ellipse may be 4.4-5.4 Å, preferably 4.5-5.3 Å, more preferably 4.6-5.2 Å.

In certain further preferred embodiments, the SCM-41 molecular sieve belongs to the monoclinic symmetry.

In certain even more preferred embodiments, the SCM-41 molecular sieve has a unit cell parameter of a = 17.0-19.0 Å, preferably a = 17.2-18.8 Å, more preferably a = 17.4-18.6 Å.

In certain even more preferred embodiments, the SCM-41 molecular sieve has a unit cell parameter of b = 12.6-14.6 Å, preferably b = 12.8-14.4 Å, more preferably b = 13.0-14.2 Å.

In certain even more preferred embodiments, the SCM-41 molecular sieve has a unit cell parameter of c = 21.2-23.2 Å, preferably c = 21.4-23.0 Å, more preferably c = 21.6-22.8 Å.

In certain even more preferred embodiments, the SCM-41 molecular sieve has unit cell parameters of $\alpha$ = 90°, $\gamma$ = 90°.

In certain even more preferred embodiments, the SCM-41 molecular sieve has a unit cell parameter of $\beta$ = 96-106°, preferably $\beta$ = 97-105°, more preferably $\beta$ = 98-104°.

In certain further preferred embodiments, the crystals of the SCM-41 molecular sieve are with plate-like morphology.

In certain further preferred embodiments, the molar ratio of silicon calculated as $SiO_2$ to germanium calculated as $GeO_2$ in the SCM-41 molecular sieve, also referred to herein as the silicon-germanium molar ratio or $SiO_2/GeO_2$ molar ratio, is (0.25-25) : 1, preferably (0.5-20) : 1, more preferably (1-15) : 1, even more preferably (1.5-10) : 1. As specific examples, the $SiO_2/GeO_2$ molar ratio may be 0.25:1, 0.5:1, 1:1, 1.5:1, 2:1, 5:1, 10:1, 15:1, 20:1, 25:1, or any value in between.

In certain further preferred embodiments, the SCM-41 molecular sieve has a schematic chemical composition represented by the formula "$SiO_2 \cdot 1/n\ GeO_2$", wherein n represents the silicon-germanium molar ratio of the molecular sieve, $0.25 \le n \le 25$, preferably $0.5 \le n \le 20$, more preferably $1 \le n \le 15$, particularly preferably $1.5 \le n \le 10$. As specific examples, n may be 0.25, 0.5, 1, 1.5, 2, 5, 10, 15, 20, 25, or any value in between. Those skilled in the art will understand that molecular sieves sometimes (especially immediately after synthesis) contain a certain amount of water, but the presence or absence of this water does not substantially affect the XRD pattern of the molecular sieve. Therefore, the content of this water is not limited in the present application. In view of this, the schematic chemical composition given above in the present application represents the anhydrous chemical composition of this molecular sieve. Moreover, it is obvious that this schematic chemical composition represents the framework chemical composition of this SCM-41 molecular sieve.

In certain further preferred embodiments, the SCM-41 molecular sieve may further comprise an additional element X, the additional element X being selected from boron, aluminum, gallium, titanium, zirconium, hafnium, tin, zinc, iron, chromium, indium, or a combination thereof, preferably selected from aluminum and titanium. Preferably, at least a portion of the additional element is present in the form of an oxide.

In even more preferred embodiments, calculated on a molar basis of elements, the ratio of the total molar content of Si element and Ge element to the total molar content of all additional elements X in the molecular sieve is ≥5, preferably ≥10, more preferably 10-100. As specific examples, calculated on a molar basis of elements, the ratio of the total molar content of Si element and Ge element to the total molar content of all additional elements X in the molecular sieve may be 5, 10, 20, 40, 60, 80, 100, 150, 200, or any value in between.

In certain even more preferred embodiments, in the SCM-41 molecular sieve, silicon and germanium on the framework are partially replaced by the additional element X, with a replacement rate not exceeding 20%. Here, the "replacement rate" is dimensionless and is calculated using moles according to the following formula:

$$\text{Replacement Rate} = X/(Si+Ge) \times 100\%.$$

Particularly preferably, the additional element X replacing silicon and germanium is selected from boron, aluminum, tin, zirconium, titanium, or a combination thereof, more preferably selected from aluminum and titanium.

In certain further preferred embodiments, the SCM-41 molecular sieve has a specific surface area (BET method) of 250-1000 $m^2/g$, preferably 300-800 $m^2/g$.

In certain further preferred embodiments, the SCM-41 molecular sieve has a micropore volume (t-plot method) of 0.1-0.4 $cm^3/g$, preferably 0.12-0.35 $cm^3/g$.

In other preferred embodiments, the silicon-germanium molecular sieve may be an as-synthesized silicon-germanium molecular sieve, having a schematic chemical composition represented by the formula "$kF•mQ•SiO_2•1/nGeO_2•pH_2O$" or "$kF•mQ•SiO_2•1/nGeO_2•$ q $XO_{y/2}•pH_2O$", wherein Q is an organic template, X represents an element selected from boron, aluminum, gallium, titanium, zirconium, hafnium, tin, zinc, iron, chromium, indium, or a combination thereof, preferably selected from aluminum and titanium, y is the valence of element X, and is in the range of 1-7, wherein:

$0.25 \leq n \leq 25$, preferably $0.5 \leq n \leq 20$, more preferably $1 \leq n \leq 15$, particularly preferably $1.5 \leq n \leq 10$;
$0.05 \leq k \leq 1.0$, preferably $0.05 \leq k \leq 0.5$, more preferably $0.1 \leq k \leq 0.5$, particularly preferably $0.1 \leq k \leq 0.4$;
$0.01 \leq m \leq 1.0$, preferably $0.02 \leq m \leq 0.5$, more preferably $0.05 \leq m \leq 0.5$, particularly preferably $0.05 \leq m \leq 0.3$;
$0.005 \leq p \leq 0.5$, preferably $0.01 \leq p \leq 0.4$, more preferably $0.01 \leq p \leq 0.3$, particularly preferably $0.02 \leq p \leq 0.2$;
$0 \leq q \leq (1+1/n)/5$, preferably $0 \leq q \leq (1+1/n)/10$, more preferably $(1+1/n)/100 \leq q \leq (1+1/n)/10$.

According to the present application, the organic template Q comprises or consists of 1-[bis[3-(dimethylamino)propyl]amino]-2-propanol. The structural formula of the 1-[bis[3-(dimethylamino)propyl]amino]-2-propanol, also called 1-[di(3-dimethylaminopropyl)amino]-2-propanol, also called 1-[Bis[3-(dimethylamino)propyl]amino]-2-propanol, is as shown below:

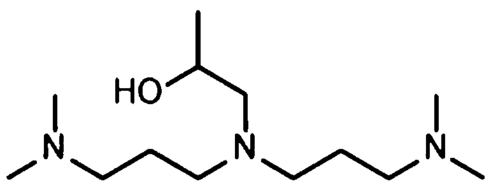

In certain further preferred embodiments, the X-ray diffraction pattern of the as-synthesized silicon-germanium molecular sieve further exhibits one or more X-ray diffraction peaks as shown in the table below:

| 2θ (°) | d-spacing (Å) |
|---|---|
| 8.78 ±0.3 | 10.12 ±0.35 |
| 11.53 ±0.3 | 7.70 ±0.30 |
| 16.35 ±0.3 | 5.43 ±0.20 |
| 17.34 ±0.3 | 5.12 ±0.15 |
| 23.22 ±0.3 | 3.84 ±0.08 |

In certain even more preferred embodiments, the X-ray diffraction pattern of the as-synthesized silicon-germanium molecular sieve further exhibits one or more X-ray diffraction peaks as shown in the table below:

| 2θ (°) | d-spacing (Å) |
|---|---|
| 23.86 ±0.3 | 3.73 ±0.08 |
| 24.74 ±0.3 | 3.60 ±0.05 |
| 26.22 ±0.3 | 3.40 ±0.05 |
| 28.15 ±0.3 | 3.17 ±0.03 |
| 28.60 ±0.3 | 3.12 ±0.03 |
| 30.04 ±0.3 | 2.98 ±0.03 |

In certain further preferred embodiments, the X-ray diffraction pattern of the as-synthesized silicon-germanium molecular sieve exhibits relative intensity characteristics of diffraction peaks as shown in the table below:

| 2θ (°) | d-spacing (Å) | Relative Intensity $(I/I_0)\times100$ |
|---|---|---|
| 8.15 ±0.3 | 10.91 ±0.40 | vs |
| 10.06 ±0.3 | 8.83 ±0.30 | w-m |
| 12.27 ±0.3 | 7.24 ±0.25 | m-s |
| 15.38 ±0.3 | 5.78 ±0.20 | vw-w |
| 19.29 ±0.3 | 4.61 ±0.15 | w-m |
| 20.55 ±0.3 | 4.33 ±0.10 | vw-w |
| 21.64 ±0.3 | 4.11 ±0.10 | w-s |

In certain even more preferred embodiments, the X-ray diffraction pattern of the as-synthesized silicon-germanium molecular sieve further exhibits relative intensity characteristics of diffraction peaks as shown in any one or more rows of the table below:

| 2θ (°) | d-spacing (Å) | Relative Intensity $(I/I_0)\times100$ |
|---|---|---|
| 8.78 ±0.3 | 10.12 ±0.35 | vw-w |
| 11.53 ±0.3 | 7.70 ±0.30 | vw-w |
| 16.35 ±0.3 | 5.43 ±0.20 | vw-w |
| 17.34 ±0.3 | 5.12 ±0.15 | vw-w |
| 23.22 ±0.3 | 3.84 ±0.08 | vw-w |

In certain particularly preferred embodiments, the X-ray diffraction pattern of the as-synthesized silicon-germanium molecular sieve further exhibits relative intensity characteristics of diffraction peaks as shown in any one or more rows of the table below:

| 2θ (°) | d-spacing (Å) | Relative Intensity $(I/I_0)\times100$ |
|---|---|---|
| 23.86 ±0.3 | 3.73 ±0.08 | vw-w |
| 24.74 ±0.3 | 3.60 ±0.05 | vw-w |
| 26.22 ±0.3 | 3.40 ±0.05 | vw-w |
| 28.15 ±0.3 | 3.17 ±0.03 | vw-w |
| 28.60 ±0.3 | 3.12 ±0.03 | vw-w |
| 30.04 ±0.3 | 2.98 ±0.03 | vw-w |

Those skilled in the art will understand that as-synthesized molecular sieves generally may also contain organic matter (especially organic template) and water, etc., such as those filling their channels in the composition thereof. Therefore, the SCM-41 molecular sieve of the present application in its as-synthesized state may have a schematic chemical composition represented by the formula "$kF•mQ•SiO_2•1/nGeO_2•pH_2O$" or "$kF•mQ•SiO_2•1/nGeO_2•$ q $XO_{y/2}•$-$pH_2O$". Obviously, by calcining the as-synthesized molecular sieve with said schematic chemical composition to remove any organic template and at least part of the water (if present), etc., existing in its channels, the SCM-41 molecular sieve can be obtained.

According to the present application, the calcination can be performed in any manner conventionally known in the art. For example, the calcination temperature is generally from 300°C to 750°C, preferably from 400°C to 600°C, and the calcination time is generally from 1 hour to 10 hours, preferably from 3 hours to 6 hours. In addition, the calcination is generally performed under an oxygen-containing atmosphere, such as air or oxygen atmosphere.

In a second aspect, a method for preparing the silicon-germanium molecular sieve of the present application is

provided, comprising steps of mixing a silicon source, a germanium source, a fluorine source, an organic template Q, water, and optionally an additional element X source; subjecting to a crystallization reaction; and optionally calcining, to obtain the silicon-germanium molecular sieve, wherein the organic template Q comprises or consists of 1-[bis[3-(dimethylamino)propyl]amino]-2-propanol.

Those skilled in the art will understand that in the method of the present application, if calcination is not performed after the crystallization reaction, the as-synthesized silicon-germanium molecular sieve described in the first aspect of the present application is obtained, whereas if calcination is performed after the crystallization reaction, the SCM-41 molecular sieve described in the first aspect of the present application is obtained.

In the present application, there are no strict restrictions on the silicon source, and various silicon sources conventionally used in preparation of molecular sieve can be employed. In preferred embodiments, the silicon source is selected from water glass, silica sol, solid silica gel, fumed silica, amorphous silica, diatomaceous earth, zeolite molecular sieve, tetraethyl orthosilicate, or a combination thereof, more preferably selected from silica sol, fumed silica, tetraethyl orthosilicate, or a combination thereof. These silicon sources can be used alone or in combination in a desired ratio.

In the present application, there are no strict restrictions on the germanium source, and various germanium sources conventionally used in preparation of silicon-germanium molecular sieve can be employed. In preferred embodiments, the germanium source is selected from germanium oxide, germanium nitrate, tetraalkoxygermanium, or a combination thereof.

In the present application, there are no strict restrictions on the fluorine source, and various soluble fluorides or aqueous solutions thereof conventionally used can be employed. In preferred embodiments, the fluorine source is selected from hydrofluoric acid, ammonium fluoride, sodium fluoride, potassium fluoride, or a combination thereof, preferably selected from hydrofluoric acid and ammonium fluoride.

According to the present application, when the silicon-germanium molecular sieve needs to contain an additional element X, for example, when this additional element X is used to replace part of the silicon and germanium in the molecular sieve framework, an additional element X source is further included in the raw materials for preparing the molecular sieve. In preferred embodiments, the additional element X source is selected from a boron source, an aluminum source, a gallium source, a titanium source, a zirconium source, a hafnium source, a tin source, a zinc source, an iron source, a chromium source, an indium source, or a combination thereof; preferably selected from an boron oxide source, an aluminum oxide source, a gallium oxide source, a titanium oxide source, a zirconium oxide source, a hafnium oxide source, a tin oxide source, a zinc oxide source, an iron oxide source, a chromium oxide source, an indium oxide source, or a combination thereof. For example, as the aluminum oxide source, it includes but is not limited to aluminum hydroxide, sodium aluminate, aluminum salts, kaolin and montmorillonite, or a combination thereof; as the boron oxide source, it includes but is not limited to boron oxide, borax, sodium metaborate, and boric acid, or a combination thereof; as the tin oxide source, it includes but is not limited to tin tetrachloride, stannous chloride, alkyltin, alkoxytin, and organotin esters, or a combination thereof. As the zirconium oxide source, it includes but is not limited to zirconium salts (such as zirconium nitrate, zirconium sulfate), alkylzirconium, alkoxyzirconium, and organozirconium esters, or a combination thereof. As the titanium oxide source, it includes but is not limited to one or more of tetraalkyl titanates (such as tetramethyl titanate, tetraethyl titanate, tetrapropyl titanate, tetra-n-butyl titanate), titanium tetrachloride, hexafluorotitanic acid, titanium sulfate, and hydrolysis products thereof. As the gallium oxide source, it includes but is not limited to gallium nitrate, gallium oxide, gallium halides (such as gallium chloride, gallium bromide), gallium sulfate, gallium isopropoxide, gallium acetate, ethoxygallium, or a combination thereof; as the hafnium oxide source, it includes but is not limited to hafnium oxide, hafnium halides (such as hafnium chloride, hafnium bromide), hafnium sulfate, hafnium tert-butoxide, hafnium oxychloride, ethoxyhafnium, or a combination thereof; as the zinc oxide source, it includes but is not limited to zinc oxide, zinc halides (such as zinc chloride), zinc acetate, basic zinc carbonate, zinc sulfate, zinc nitrate, zinc lactate, zinc gluconate, or a combination thereof; as the iron oxide source, it includes but is not limited to iron sulfate, iron nitrate, iron halides (such as ferric chloride), ferrocene, ferric citrate, or a combination thereof; as the chromium oxide source, it includes but is not limited to chromium(III) oxide, chromium chloride, chromium nitrate, chromium acetate, chromium potassium sulfate, or a combination thereof; as the indium oxide source, it includes but is not limited to: indium oxide, indium sulfate, indium halides (such as indium trichloride), indium acetate, or a combination thereof.

In preferred embodiments, the molar ratio of the amounts of the organic template Q, the silicon source (calculated as $SiO_2$), the germanium source (calculated as $GeO_2$), the fluorine source (calculated as F), and water is (0.15-4) : (0.2-0.97) : (0.03-0.8) : (0.2-4) : (0.5-30), preferably (0.15-4) : (0.2-0.9615) : (0.0385-0.8) : (0.2-4) : (0.5-30), more preferably (0.25-3.5) : (0.3-0.96) : (0.04-0.7) : (0.35-3.5) : (1-25), further preferably (0.3-2.5) : (0.5-0.94) : (0.06-0.5) : (0.4-2.5) : (2-20), even more preferably (0.35-1.5) : (0.6-0.91) : (0.09-0.4) : (0.45-2) : (3-15), wherein the total molar amount of the silicon source and the germanium source is 1 part.

In preferred embodiments, the ratio of the total molar amount of the additional element X source (calculated as element X) to the total molar amount of the silicon source (calculated as $SiO_2$) and germanium source (calculated as $GeO_2$) is (0-0.2) : 1, preferably (0-0.1) : 1, more preferably (0.01-0.01) : 1.

In preferred embodiments, the crystallization reaction is performed at 100-200°C for 24-360 hours, preferably at

110-190°C for 48-300 hours, more preferably at 120-180°C for 72-240 hours. According to the present application, the crystallization reaction can be performed in any manner conventionally known in the art. For example, it can include mixing the silicon source, the germanium source, the fluorine source, the organic template Q, water, and optionally the additional element X source in predetermined proportions, and subjecting the obtained mixture to hydrothermal crystallization under crystallization conditions. Optionally, crystallization can be performed under stirring as needed.

According to the present application, in the method for preparing the molecular sieve, after the crystallization reaction is completed, the resulting molecular sieve can be separated from the obtained reaction mixture by any conventionally known separation method, thereby obtaining the as-synthesized silicon-germanium molecular sieve. As the separation method, mention may be made of, for example, filtering, washing, and drying the obtained reaction mixture. According to the present application, the filtering, washing, and drying can be performed in any manner conventionally known in the art. Specifically, as the filtering, mention may be made of, for example, simply suction-filtering the obtained reaction mixture. As the washing, mention may be made of, for example, washing with deionized water. As the drying temperature, it can be, for example, from 40 to 250°C, preferably from 60 to 150°C. As the drying time, it can be, for example, from 8 to 30 hours, preferably from 10 to 20 hours. This drying can be performed at atmospheric pressure or under reduced pressure.

According to the present application, in the method for preparing the molecular sieve, as needed, the molecular sieve obtained from the crystallization reaction, for example, the as-synthesized silicon-germanium molecular sieve, can be calcined to remove any organic template and at least part of the water (if present), etc., existing therein, thereby obtaining the calcined molecular sieve, i.e., the silicon-germanium molecular sieve SCM-41 of the present application. The calcination can be performed in any manner conventionally known in the art. For example, the calcination temperature is generally from 300 to 800°C, preferably from 400 to 650°C, and the calcination time is generally from 1 to 10 hours, preferably from 3 to 6 hours. In preferred embodiments, the calcination is performed at 300-750°C for 1-10 hours, more preferably at 400-600°C for 3-6 hours. In addition, the calcination is generally performed under an oxygen-containing atmosphere, such as air or oxygen atmosphere.

According to the present application, the silicon-germanium molecular sieve SCM-41 or as-synthesized silicon-germanium molecular sieve can be presented in any physical form, such as powdered, granular, or molded (e.g., strip shaped, trilobe shaped, etc.). These physical forms can be obtained by any manner conventionally known in the art, without particular limitation.

In a third aspect, the present application provides a molecular sieve composition comprising the silicon-germanium molecular sieve of the first aspect of the present application, such as the as-synthesized silicon-germanium molecular sieve and/or the SCM-41 molecular sieve, and an active material and/or a binder.

According to the present application, the SCM-41 molecular sieve or as-synthesized silicon-germanium molecular sieve can be composited with other materials to obtain the molecular sieve composition. As the other materials, mention may be made of, for example, active materials and inactive materials. As the active material, mention may be made of, for example, synthetic zeolites and natural zeolites, etc. As the inactive material (generally called a binder), mention may be made of, for example, clays, white clay, silica gel, and alumina, etc. These other materials can be used alone or in combination in any proportion. The amount of the other materials can directly refer to conventional amounts in the art, without particular limitation.

In a fourth aspect, use of the silicon-germanium molecular sieve according to the first aspect of the present application, such as the as-synthesized silicon-germanium molecular sieve and/or the SCM-41 molecular sieve, or the molecular sieve composition according to the third aspect, as an adsorbent or a catalyst is provided.

According to the present application, the SCM-41 molecular sieve, the as-synthesized silicon-germanium molecular sieve, or the molecular sieve composition can be used as an adsorbent, for example, to separate at least one component from a mixture of multiple components in the gas or liquid phase, so that the at least one component is partially or substantially completely separated from the mixture. The specific separation method can involve contacting the mixture with the molecular sieve or the molecular sieve composition to selectively adsorb this component. As an adsorbent, mention may be made of, for example, one for selectively adsorbing water from cyclohexane.

According to the present application, the SCM-41 molecular sieve, the as-synthesized silicon-germanium molecular sieve, or the molecular sieve composition can also be used directly or after necessary treatments or conversions conventionally performed on molecular sieves in the art (such as ion exchange, etc.) as a catalyst (or as a catalytically active component thereof). In certain specific embodiments, for example, a reactant (such as a hydrocarbon) can be subjected to a predetermined reaction in the presence of the catalyst, thereby obtaining the target product. As a catalyst, mention may be made of, for example, one for reacting benzene with ethylene to produce ethylbenzene.

## Examples

The technical solutions of the present application are further described in detail below through examples, but the protection scope of the present application is not limited to these examples.

In the following examples and comparative examples, the specific surface area, pore volume, and micropore volume of the molecular sieves were determined by nitrogen physical adsorption. The specific surface area was calculated using the BET method, with the point range taken as relative pressure $p/p_0$ = 0.01-0.1; the total pore volume was calculated using the adsorption amount corresponding to relative pressure $p/p_0$ = 0.99; the micropore volume was calculated using the t-plot method. The nitrogen physical adsorption-desorption experimental conditions were as follows: tested using a MicrotracBEL Belsorp Max-II physical adsorption instrument, at a measurement temperature of 77 K; molecular sieves were pretreated under vacuum at 350°C for 6 hours before measurement, using nitrogen as the adsorbate.

In the following examples and comparative examples, the X-ray diffraction (XRD) patterns of the molecular sieve products were measured by: using a Panalytical X PERPRO X-ray powder diffractometer to analyze the material phase of the sample, with a Cu K$\alpha$ radiation source, K$\alpha$1 wavelength $\lambda$ = 1.5405980 Å, nickel filter, 2$\theta$ scan range 2-50°, operating voltage 40 kV, current 40 mA, scan rate 10°/min.

In the following examples and comparative examples, scanning electron microscope (SEM) images were tested using a Hitachi S-4800II field emission scanning electron microscope (Japan), with a test voltage of 3 kV and a test current of 10 mA.

In the following examples and comparative examples, the framework topology naturally tiled structures of the molecular sieves were obtained using TOPOS software; the structural models were drawn using 3dt software; the unit cell parameters of the molecular sieves were obtained using powder XRD pattern indexing and simulation software; the crystal structure of the molecular sieves was determined by analysis and refinement of three-dimensional electron diffraction data, the three-dimensional electron diffraction was automatically collected by the Instamatic software built into a JEOL JEM2100 transmission electron microscope. Structural analysis and refinement were performed using SHELXT and SHELXLE software, respectively.

In the following examples and comparative examples, the contents of Si, Ge, and element X in the molecular sieves were determined by inductively coupled plasma-atomic emission spectroscopy (ICP-AES), and the contents of F, organic template Q, and water were determined by thermogravimetric analysis.

In the following examples and comparative examples, unless explicitly stated, the reagents and raw materials used were commercially available products with analytical grade purity.

In the following examples and comparative examples, for operational steps and methods without specific conditions indicated, they were carried out according to conventional methods and conditions, or according to the commercial instructions of the relevant equipment.

**Example 1**

4.91 g of 1-[bis[3-(dimethylamino)propyl]amino]-2-propanol was uniformly mixed with 1.57 g of water, 1.2 g of germanium oxide was added, 4.29 g of Ludox silica sol ($SiO_2$ 40 wt%) was slowly added under stirring, and stirring was continued at room temperature for 4 h. Finally, 1.5 g of hydrofluoric acid (40 wt%) was added, stirring was continued for 1 hour, and then the above mixture was charged into a crystallization kettle with a polytetrafluoroethylene liner and placed in an oven at 155°C for crystallization for 168 hours. After the reaction, the solid was filtered, washed with distilled water, and dried at 100°C to obtain an as-made powder solid of as-synthesized molecular sieve (with a schematic chemical composition of $0.09\ F\bullet 0.09\ Q\bullet SiO_2\bullet 0.4\ GeO_2\bullet 0.14\ H_2O$). This as-made powder solid was placed in a muffle furnace and calcined at 550°C for 5 hours to obtain the final product SCM-41 molecular sieve.

One framework topology of the final product SCM-41 molecular sieve comprises natural tiles of $[4^6]$, $[4^4.6^2]$, $[4^2.5^4]$, $[4^2.5^4.6^2]$, $[4^7.5^6.6^9.10^4]$, see Figure 1a; the minimum repeating unit of the framework topology of the SCM-41 molecular sieve is composed of 2 $[4^6]$, 2 $[4^4.6^2]$, 2 $[4^2.5^4]$, 1 $[4^2.5^4.6^2]$, 2 $[4^7.5^6.6^9.10^4]$ natural tiles, and the tiling structure is shown in Figure 1b. Another framework topology of this SCM-41 molecular sieve comprises natural tiles of $[4^6]$, $[4^4.6^2]$, $[4^2.5^4]$, $[4^2.6^4]$, $[4^{14}.5^8.6^{16}.10^8]$, see Figure 2a; the minimum repeating unit of the framework topology of the SCM-41 molecular sieve is composed of 2 $[4^6]$, 2 $[4^4.6^2]$, 2 $[4^2.5^4]$, 1 $[4^2.6^4]$, 2 $[4^{14}.5^8.6^{16}.10^8]$ natural tiles, and the tiling structure is shown in Figure 2b.

This SCM-41 molecular sieve has intersecting straight channels with 10-membered ring openings along the crystal [010] and [110] directions, see Figures 3 and 4. The planar projection of the channels with 10-membered ring openings of this SCM-41 molecular sieve is elliptical. The elliptical pores have a major axis of 6.0-7.0 Å; and a minor axis of 4.4-5.4 Å.

The XRD pattern of this SCM-41 molecular sieve is shown in Figure 5A, and the pattern data are listed in Table 1A; the XRD pattern of the as-synthesized molecular sieve obtained in Example 1 is shown in Figure 5B, and the pattern data are listed in Table 1B. The three-dimensional electron diffraction data parameters, analysis, and refinement results for the as-made powder sample of as-synthesized molecular sieve are listed in Tables 2-4.

The SEM image of this SCM-41 molecular sieve is shown in Figure 6; it can be seen from Figure 6 that the SCM-41 molecular sieve is of plate-like morphology. The nitrogen adsorption-desorption isotherm is shown in Figure 7; it can be seen from Figure 7 that the SCM-41 molecular sieve has a Type I isotherm, a specific surface area of 507 $m^2/g$, and

a micropore volume of 0.19 $cm^3/g$. The raw material ratio for synthesizing this molecular sieve is shown in Table 8.

Table 1A. XRD Pattern of SCM-41 Molecular Sieve Obtained in Example 1

| 2θ (°) | d-spacing (Å) | Relative Intensity (%) (I/I0)×100 |
|---|---|---|
| 8.06 | 10.96 | 100 |
| 8.76 | 10.08 | 13.2 |
| 9.97 | 8.87 | 23.1 |
| 11.44 | 7.73 | 1.5 |
| 12.17 | 7.27 | 19.9 |
| 12.96 | 6.82 | 4.4 |
| 14.14 | 6.26 | 2.6 |
| 15.31 | 5.78 | 1.6 |
| 16.28 | 5.44 | 0.6 |
| 17.22 | 5.15 | 2.2 |
| 19.23 | 4.61 | 5.7 |
| 20.52 | 4.32 | 5.5 |
| 21.57 | 4.12 | 19.1 |
| 23.15 | 3.89 | 0.8 |
| 23.73 | 3.75 | 4.9 |
| 24.61 | 3.61 | 4.7 |
| 26.15 | 3.41 | 9.5 |
| 28.09 | 3.17 | 6.7 |
| 28.48 | 3.13 | 8.3 |
| 29.95 | 2.98 | 2.2 |

Table 1B. XRD Pattern of As-Synthesized Molecular Sieve Obtained in Example 1

| 2θ (°) | d-spacing (Å) | Relative Intensity (%) (I/I0)×100 |
|---|---|---|
| 8.24 | 10.72 | 100 |
| 8.91 | 9.92 | 9 |
| 10.13 | 8.73 | 26.6 |
| 11.63 | 7.60 | 2.9 |
| 12.35 | 7.16 | 41.8 |
| 15.44 | 5.73 | 4.5 |
| 16.39 | 5.40 | 3.7 |
| 17.51 | 5.06 | 1.7 |
| 19.40 | 4.57 | 15.3 |
| 20.66 | 4.30 | 7.1 |
| 21.79 | 4.08 | 32.6 |
| 23.36 | 3.80 | 2.3 |
| 23.87 | 3.73 | 4.1 |
| 24.85 | 3.58 | 9.2 |
| 26.22 | 3.40 | 16.5 |

(continued)

| 2θ (°) | d-spacing (Å) | Relative Intensity (%) (I/I0)×100 |
|---|---|---|
| 28.24 | 3.16 | 11.1 |
| 28.69 | 3.11 | 13.6 |
| 30.05 | 2.97 | 4.1 |

Table 2. Analysis Results of As-Synthesized Molecular Sieve Obtained in Example 1

| Space group | C2/m | | | |
|---|---|---|---|---|
| Unit cell parameters | a= 18.0150 Å, b= 13.5950 Å, c= 22.1850 Å, β= 100.96° | | | |
| Atomic coordinates (T represents framework atom) | | | | |
| Atom | x | y | z | Occupancy |
| T1 | 0.8825 | 0.6136 | 0.5467 | 1.0 |
| T2 | 0.7387 | 0.6113 | 0.4430 | 1.0 |
| T3 | 0.7776 | 0.6952 | 0.6344 | 1.0 |
| T4 | 0.8050 | 0.6139 | 0.7699 | 1.0 |
| T5 | 0.6367 | 0.6143 | 0.5465 | 1.0 |
| T6 | 1.0000 | 0.7503 | 0.5000 | 1.0 |
| T7 | 0.7061 | 0.6142 | 0.8729 | 1.0 |
| T8 | 0.4484 | 0.8870 | 0.8704 | 1.0 |
| T9 | 0.6519 | 0.8865 | 1.0247 | 1.0 |
| T10 | 0.5839 | 0.7460 | 0.9182 | 1.0 |
| T11 | 0.4703 | 0.6172 | 0.9784 | 0.5 |
| O1 | 0.5420 | 0.6707 | 0.9573 | 1.0 |
| O2 | 0.7368 | 0.6402 | 0.8068 | 1.0 |
| O3 | 0.9583 | 0.6827 | 0.5452 | 1.0 |
| O4 | 0.7333 | 0.5000 | 0.4102 | 1.0 |
| O5 | 0.5615 | 0.6811 | 0.5455 | 1.0 |
| O6 | 0.7946 | 0.6834 | 0.7068 | 1.0 |
| O7 | 0.8449 | 0.6425 | 0.6071 | 1.0 |
| O8 | 0.7751 | 0.8107 | 0.6187 | 1.0 |
| O9 | 0.6980 | 0.6434 | 0.6070 | 1.0 |
| O10 | 0.9129 | 0.5000 | 0.5533 | 1.0 |
| O11 | 0.6698 | 0.6383 | 0.4824 | 1.0 |
| O12 | 0.6111 | 0.5000 | 0.5524 | 1.0 |
| O13 | 0.7997 | 0.5000 | 0.7422 | 1.0 |
| O14 | 0.8229 | 0.6380 | 0.4820 | 1.0 |
| O15 | 0.4848 | 1.0000 | 0.8644 | 1.0 |
| O16 | 0.6304 | 0.6849 | 0.8728 | 1.0 |
| O17 | 0.5208 | 0.8089 | 0.8716 | 1.0 |
| O18 | 0.6703 | 0.5000 | 0.8700 | 1.0 |
| O19 | 0.8915 | 0.6423 | 0.8058 | 1.0 |

(continued)

| Space group | C2/m | | | |
|---|---|---|---|---|
| Unit cell parameters | a= 18.0150 Å, b= 13.5950 Å, c= 22.1850 Å, β= 100.96° | | | |
| Atomic coordinates (T represents framework atom) | | | | |
| Atom | x | y | z | Occupancy |
| O20 | 0.7342 | 0.8609 | 1.0636 | 1.0 |
| O21 | 0.6408 | 0.8157 | 0.9631 | 1.0 |
| O22 | 0.5825 | 0.8613 | 1.0652 | 1.0 |
| O23 | 0.6415 | 1.0000 | 0.9993 | 1.0 |
| O24 | 0.3949 | 0.6370 | 0.9260 | 0.5 |
| O25 | 0.5176 | 0.5000 | 1.0133 | 0.5 |

Table 3. Analysis Results of As-Synthesized Molecular Sieve Obtained in Example 1

| Space group | C2/m | | | |
|---|---|---|---|---|
| Unit cell parameters | *a*= 18.0150 Å, *b*= 13.5950 Å, *c*= 22.1850 Å, *β*= 100.96° | | | |
| Atomic coordinates (T represents framework atom) | | | | |
| Atom | x | y | z | Occupancy |
| T1 | 0.8825 | 0.6136 | 0.5467 | 1.00 |
| T2 | 0.7387 | 0.6113 | 0.4430 | 1.00 |
| T3 | 0.7776 | 0.6952 | 0.6344 | 1.00 |
| T4 | 0.8050 | 0.6139 | 0.7699 | 1.00 |
| T5 | 0.6367 | 0.6143 | 0.5465 | 1.00 |
| T6 | 1.0000 | 0.7503 | 0.5000 | 1.00 |
| T7 | 0.7061 | 0.6142 | 0.8729 | 1.00 |
| T8 | 0.4484 | 0.8870 | 0.8704 | 1.00 |
| T9 | 0.6519 | 0.8865 | 1.0247 | 1.00 |
| T10 | 0.5839 | 0.7460 | 0.9182 | 1.00 |
| O1 | 0.5420 | 0.6707 | 0.9573 | 1.00 |
| O2 | 0.7368 | 0.6402 | 0.8068 | 1.00 |
| O3 | 0.9583 | 0.6827 | 0.5452 | 1.00 |
| O4 | 0.7333 | 0.5000 | 0.4102 | 1.00 |
| O5 | 0.5615 | 0.6811 | 0.5455 | 1.00 |
| O6 | 0.7946 | 0.6834 | 0.7068 | 1.00 |
| O7 | 0.8449 | 0.6425 | 0.6071 | 1.00 |
| O8 | 0.7751 | 0.8107 | 0.6187 | 1.00 |
| O9 | 0.6980 | 0.6434 | 0.6070 | 1.00 |
| O10 | 0.9129 | 0.5000 | 0.5533 | 1.00 |
| O11 | 0.6698 | 0.6383 | 0.4824 | 1.00 |
| O12 | 0.6111 | 0.5000 | 0.5524 | 1.00 |
| O13 | 0.7997 | 0.5000 | 0.7422 | 1.00 |
| O14 | 0.8229 | 0.6380 | 0.4820 | 1.00 |

(continued)

| Space group | C2/m | | | |
|---|---|---|---|---|
| Unit cell parameters | *a*= 18.0150 Å, *b*= 13.5950 Å, *c*= 22.1850 Å, $\beta$= 100.96° | | | |
| Atomic coordinates (T represents framework atom) | | | | |
| Atom | x | y | z | Occupancy |
| O15 | 0.4848 | 1.0000 | 0.8644 | 1.00 |
| O16 | 0.6304 | 0.6849 | 0.8728 | 1.00 |
| O17 | 0.5208 | 0.8089 | 0.8716 | 1.00 |
| O18 | 0.6703 | 0.5000 | 0.8700 | 1.00 |
| O19 | 0.8915 | 0.6423 | 0.8058 | 1.00 |
| O20 | 0.7342 | 0.8609 | 1.0636 | 1.00 |
| O21 | 0.6408 | 0.8157 | 0.9631 | 1.00 |
| O22 | 0.5825 | 0.8613 | 1.0652 | 1.00 |
| O23 | 0.6415 | 1.0000 | 0.9993 | 1.00 |

Table 4. Analysis Results of As-Synthesized Molecular Sieve Obtained in Example 1

| Crystal data | |
|---|---|
| Formula | $|F^-_{8.0}|[Si_{55.10}Ge_{24.9}\ O_{162.0}]$ |
| Symmetry | Monoclinic |
| Space group | *C*2/*m* (No. 12) |
| *a*, *b*, *c* (Å)* | 18.0150, 13.5950, 22.1850 |
| $\alpha$, $\beta$, $\gamma$ (°) | 90, 100.96, 90 |
| *V* (Å$^3$) | 5334.1 |
| $\rho$ (g/cm$^3$) | 1.903 |
| Data details | |
| Temperature (K) | 293 |
| Radiation (Å) | electrons, 0.0251 |
| Resolution (Å) | 0.80 |
| Completeness (%) | 98.4 |
| Signal-to-Noise Ratio $I/\sigma$ | 4.73 |
| Intensity Correlation Coefficient $CC_{1/2}$ | 97.6 |
| Number of Crystals | 6 |
| Total reflection, Unique reflection, $R_{int}$ | 49382, 5615, 0.2704 |
| Observed Data [$I > 2.0\sigma(I)$] | 4091 |
| Refinement | |
| $N_{reflections}$, $N_{parameters}$, $N_{restraints}$ | 5616, 320, 37 |
| $R1$, $wR2$ [$F^2 > 2.0\sigma(F^2)$] | 0.2363, 0.5412 |
| $R1$, $wR2$ (all data) | 0.2627, 0.5543 |
| $N_{restraints}$ =1 DFIX+ 3 DANG+15 RIGU + 18 ISOR | |

**Example 2**

4.91 g of 1-[bis[3-(dimethylamino)propyl]amino]-2-propanol was uniformly mixed with 0.24 g of water, 0.7 g of germanium oxide was added, 5 g of Ludox silica sol ($SiO_2$ 40 wt%) was slowly added under stirring, and stirring was continued at room temperature for 4 h. Finally, 3 g of hydrofluoric acid (40 wt%) was added, stirring was continued for 1 hour, and then the above mixture was charged into a crystallization kettle with a polytetrafluoroethylene liner and placed in an oven at 155°C for crystallization for 192 hours. After the reaction, the solid was filtered, washed, and dried to obtain an as-synthesized molecular sieve, which was then calcined to obtain the final molecular sieve product.

The XRD pattern of the obtained molecular sieve product is shown in Figure 8A; it can be seen from Figure 8A that the product is the SCM-41 molecular sieve, and the pattern data are listed in Table 5A; the XRD pattern of the obtained as-synthesized molecular sieve is shown in Figure 8B, and the pattern data are listed in Table 5B.

The SEM image of the obtained SCM-41 molecular sieve is shown in Figure 9; it can be seen from Figure 9 that this SCM-41 molecular sieve is of plate-like morphology. The nitrogen adsorption-desorption isotherm is shown in Figure 10; it can be seen from Figure 10 that this SCM-41 molecular sieve has a Type I isotherm, a specific surface area of 414 $m^2/g$, and a micropore volume of 0.15 $cm^3/g$. The raw material ratio for synthesizing this molecular sieve is shown in Table 8.

Table 5A. XRD Pattern of SCM-41 Molecular Sieve Obtained in Example 2

| 2θ (°) | d-spacing (Å) | Relative Intensity (%) (I/I0)×100 |
|---|---|---|
| 8.07 | 10.95 | 100 |
| 8.70 | 10.15 | 7.9 |
| 9.99 | 8.84 | 16.7 |
| 11.43 | 7.74 | 1.4 |
| 12.17 | 7.27 | 20.7 |
| 12.96 | 6.82 | 3 |
| 14.06 | 6.30 | 3.3 |
| 15.36 | 5.77 | 1 |
| 16.37 | 5.41 | 0.5 |
| 17.29 | 5.13 | 1.5 |
| 19.26 | 4.60 | 4.3 |
| 20.47 | 4.34 | 2.9 |
| 21.57 | 4.12 | 15 |
| 23.19 | 3.81 | 1.4 |
| 23.74 | 3.75 | 3.2 |
| 24.64 | 3.61 | 5.6 |
| 26.18 | 3.40 | 7.6 |
| 28.06 | 3.18 | 5.5 |
| 28.49 | 3.13 | 6.8 |
| 29.91 | 2.98 | 1.9 |

Table 5B. XRD Pattern of As-Synthesized Molecular Sieve Obtained in Example 2

| 2θ (°) | d-spacing (Å) | Relative Intensity (%) (I/I0)×100 |
|---|---|---|
| 8.09 | 10.92 | 100 |
| 8.66 | 10.20 | 3.3 |
| 9.97 | 8.87 | 9.9 |
| 11.51 | 7.68 | 1.5 |

(continued)

| 2θ (°) | d-spacing (Å) | Relative Intensity (%) (I/I0)×100 |
|---|---|---|
| 12.20 | 7.25 | 40 |
| 15.29 | 5.79 | 2 |
| 16.20 | 5.47 | 1.6 |
| 17.35 | 5.11 | 1.2 |
| 19.20 | 4.62 | 7.8 |
| 20.50 | 4.33 | 4.3 |
| 21.60 | 4.11 | 16.3 |
| 23.22 | 3.84 | 5.1 |
| 23.86 | 3.73 | 1.4 |
| 24.64 | 3.61 | 7.3 |
| 26.14 | 3.41 | 6.2 |
| 28.05 | 3.18 | 5.6 |
| 28.49 | 3.13 | 6 |
| 29.90 | 2.99 | 1.5 |

**Example 3**

4.91 g of 1-[bis[3-(dimethylamino)propyl]amino]-2-propanol was uniformly mixed with 2.65 g of water, 1.4 g of germanium oxide was added, 4 g of Ludox silica sol ($SiO_2$ 40 wt%) was slowly added under stirring, and stirring was continued at room temperature for 4 h. Finally, 4 g of ammonium fluoride solution (37 wt%) was added, stirring was continued for 1 hour, and then the above mixture was charged into a crystallization kettle with a polytetrafluoroethylene liner and placed in an oven at 150°C for crystallization for 144 hours. After the reaction, the solid was filtered, washed, dried, and calcined to obtain the final SCM-41 molecular sieve product, with a specific surface area of 445 $m^2/g$, a micropore volume of 0.16 $cm^3/g$, and an XRD pattern similar to Figure 5. The raw material ratio for synthesizing this molecular sieve is shown in Table 8.

**Example 4**

7.36 g of 1-[bis[3-(dimethylamino)propyl]amino]-2-propanol was uniformly mixed with 4.3 g of water, 0.84 g of germanium oxide was added, 2.02 g of fumed silica ($SiO_2$ 95 wt%) was slowly added under stirring, and stirring was continued at room temperature for 4 h. Finally, 3 g of hydrofluoric acid (40 wt%) was added, stirring was continued for 1 hour, and then the above mixture was charged into a crystallization kettle with a polytetrafluoroethylene liner and placed in an oven at 160°C for crystallization for 120 hours. After the reaction, the solid was filtered, washed, and dried to obtain an as-synthesized molecular sieve, which was then calcined to obtain the final SCM-41 molecular sieve product, with a specific surface area of 477 $m^2/g$, a micropore volume of 0.17 $cm^3/g$, and XRD pattern data listed in Table 6A. The raw material ratio for synthesizing this molecular sieve is shown in Table 8. The diffraction peak positions of the XRD pattern of the as-synthesized molecular sieve were basically the same as those of the obtained SCM-41 molecular sieve, except that no obvious diffraction peaks were observed at 2θ of 13.05° and 14.19°. The pattern data are listed in Table 6B.

Table 6A. XRD Pattern of SCM-41 Molecular Sieve Obtained in Example 4

| 2θ (°) | d-spacing (Å) | Relative Intensity (%) (I/I0)×100 |
|---|---|---|
| 8.13 | 10.87 | 100 |
| 8.80 | 10.04 | 8.7 |
| 10.01 | 8.83 | 26.9 |
| 11.36 | 7.79 | 4.1 |
| 12.21 | 7.25 | 19.3 |

(continued)

| 2θ (°) | d-spacing (Å) | Relative Intensity (%) (I/I0)×100 |
|---|---|---|
| 13.03 | 6.79 | 7.5 |
| 14.22 | 6.22 | 4.2 |
| 15.40 | 5.75 | 1.1 |
| 16.40 | 5.40 | 1.4 |
| 17.42 | 5.09 | 2.7 |
| 19.39 | 4.57 | 7.4 |
| 20.63 | 4.30 | 8.1 |
| 21.73 | 4.09 | 17.5 |
| 23.31 | 3.81 | 2.7 |
| 23.88 | 3.72 | 6 |
| 24.72 | 3.60 | 5.1 |
| 26.35 | 3.38 | 9.4 |
| 28.22 | 3.16 | 7.1 |
| 28.59 | 3.12 | 7.3 |
| 30.05 | 2.97 | 2.5 |

Table 6B. XRD Pattern of As-Synthesized Molecular Sieve Obtained in Example 4

| 2θ (°) | d-spacing (Å) | Relative Intensity (%) (I/I0)×100 |
|---|---|---|
| 8.07 | 10.95 | 100 |
| 8.75 | 10.09 | 4.2 |
| 9.94 | 8.89 | 29.2 |
| 11.41 | 7.75 | 1.8 |
| 12.18 | 7.26 | 44.8 |
| 15.26 | 5.80 | 3.6 |
| 16.23 | 5.46 | 5.1 |
| 17.41 | 5.09 | 2.9 |
| 19.22 | 4.61 | 24.4 |
| 20.48 | 4.33 | 7.1 |
| 21.57 | 4.12 | 40.6 |
| 23.15 | 3.84 | 6.1 |
| 23.91 | 3.72 | 4.5 |
| 24.61 | 3.61 | 11.8 |
| 26.18 | 3.40 | 14.7 |
| 28.08 | 3.18 | 16.3 |
| 28.55 | 3.12 | 15.8 |
| 29.89 | 2.99 | 5.4 |

**Example 5**

9.82 g of 1-[bis[3-(dimethylamino)propyl]amino]-2-propanol was uniformly mixed with 0.7 g of water, 0.38 g of

germanium oxide was added, 3 g of Ludox silica sol ($SiO_2$ 40 wt%) and 1.04 g of fumed silica ($SiO_2$ 95 wt%) were slowly added under stirring, and stirring was continued at room temperature for 4 h. Finally, 0.051 g of the SCM-41 molecular sieve obtained in Example 1 was added as seed crystals and 3 g of hydrofluoric acid (40 wt%) was added, stirring was continued for 1 hour, and then the above mixture was charged into a crystallization kettle with a polytetrafluoroethylene liner and placed in an oven at 165°C for crystallization for 216 hours. After the reaction, the solid was filtered, washed, dried, and calcined to obtain the final SCM-41 molecular sieve product, with a specific surface area of 423 $m^2/g$, a micropore volume of 0.16 $cm^3/g$, and an XRD pattern similar to Figure 5. The raw material ratio for synthesizing this molecular sieve is shown in Table 8.

**Example 6**

7.85 g of 1-[bis[3-(dimethylamino)propyl]amino]-2-propanol was uniformly mixed with 0.6 g of water, 1.05 g of germanium oxide was added, 4.5 g of Ludox silica sol ($SiO_2$ 40 wt%) was slowly added under stirring, and stirring was continued at room temperature for 4 h. Finally, 2.4 g of hydrofluoric acid (40 wt%) and 1.6 g of ammonium fluoride solution (37 wt%) were added, stirring was continued for 1 hour, and then the above mixture was charged into a crystallization kettle with a polytetrafluoroethylene liner and placed in an oven at 145°C for crystallization for 192 hours. After the reaction, the solid was filtered, washed, dried, and calcined to obtain the final SCM-41 molecular sieve product, with a specific surface area of 488 $m^2/g$, a micropore volume of 0.18 $cm^3/g$, and an XRD pattern similar to Figure 5. The raw material ratio for synthesizing this molecular sieve is shown in Table 8.

**Example 7**

5.89 g of 1-[bis[3-(dimethylamino)propyl]amino]-2-propanol was uniformly mixed with 0.6 g of water, 0.49 g of germanium oxide was added, 3 g of Ludox silica sol ($SiO_2$ 40 wt%) and 0.96 g of fumed silica ($SiO_2$ 95 wt%) were slowly added under stirring, and stirring was continued at room temperature for 4 h. Finally, 2.4 g of hydrofluoric acid (40 wt%) and 2.4 g of ammonium fluoride solution (37 wt%) were added, stirring was continued for 1 hour, and then the above mixture was charged into a crystallization kettle with a polytetrafluoroethylene liner and placed in an oven at 160°C for crystallization for 192 hours. After the reaction, the solid was filtered, washed, dried, and calcined to obtain the final SCM-41 molecular sieve product, with a specific surface area of 435 $m^2/g$, a micropore volume of 0.16 $cm^3/g$, and an XRD pattern similar to Figure 5. The raw material ratio for synthesizing this molecular sieve is shown in Table 8.

**Example 8**

4.91 g of 1-[bis[3-(dimethylamino)propyl]amino]-2-propanol was uniformly mixed with 3.1 g of water, 1.2 g of germanium oxide and 0.204 g of titanium sulfate were added, 4.29 g of Ludox silica sol ($SiO_2$ 40 wt%) was slowly added under stirring, and stirring was continued at room temperature for 4 h. Finally, 2 g of hydrofluoric acid (40 wt%) was added, stirring was continued for 1 hour, and then the above mixture was charged into a crystallization kettle with a polytetrafluoroethylene liner and placed in an oven at 160°C for crystallization for 168 hours. After the reaction, the solid was filtered, washed, dried, and calcined to obtain the final SCM-41 molecular sieve product, with a specific surface area of 490 $m^2/g$, a micropore volume of 0.18 $cm^3/g$, and an XRD pattern similar to Figure 5. The raw material ratio for synthesizing this molecular sieve is shown in Table 8.

**Example 9**

4.91 g of 1-[bis[3-(dimethylamino)propyl]amino]-2-propanol was uniformly mixed with 0.55 g of water, 0.7 g of germanium oxide was added, 0.34 g of $Al_2(SO_4)_3$ solution (20 wt%) and 5 g of Ludox silica sol ($SiO_2$ 40 wt%) were slowly added sequentially under stirring, and stirring was continued at room temperature for 4 h. Finally, 3 g of hydrofluoric acid (40 wt%) was added, stirring was continued for 1 hour, and then the above mixture was charged into a crystallization kettle with a polytetrafluoroethylene liner and placed in an oven at 155°C for crystallization for 192 hours. After the reaction, the solid was filtered, washed, dried, and calcined to obtain the final SCM-41 molecular sieve product, with a specific surface area of 482 $m^2/g$, a micropore volume of 0.18 $cm^3/g$, and an XRD pattern similar to Figure 5. The raw material ratio for synthesizing this molecular sieve is shown in Table 8.

**Example 10**

4.91 g of 1-[bis[3-(dimethylamino)propyl]amino]-2-propanol was uniformly mixed with 4.3 g of water, 1.2 g of germanium oxide was added, 3.42 g of $Al_2(SO_4)_3$ solution (20 wt%) and 4.29 g of Ludox silica sol ($SiO_2$ 40 wt%) were slowly added sequentially under stirring, and stirring was continued at room temperature for 4 h. Finally, 2 g of hydrofluoric acid

(40 wt%) was added, stirring was continued for 1 hour, and then the above mixture was charged into a crystallization kettle with a polytetrafluoroethylene liner and placed in an oven at 155°C for crystallization for 168 hours. After the reaction, the solid was filtered, washed, and dried to obtain an as-synthesized molecular sieve (with a schematic chemical composition of 0.11 F•0.11 Q•$SiO_2$•0.38 $GeO_2$•0.023 $Al_2O_3$•0.20 $H_2O$), which was then calcined to obtain the final SCM-41 molecular sieve product, with a specific surface area of 462 $m^2$/g, a micropore volume of 0.17 $cm^3$/g, and XRD pattern data listed in Table 7A. The raw material ratio for synthesizing this molecular sieve is shown in Table 8. The diffraction peak positions of the XRD pattern of the as-synthesized molecular sieve were basically the same as those of the obtained SCM-41 molecular sieve, except that no obvious diffraction peaks were observed at 2θ of 13.05° and 14.19°. The pattern data are listed in Table 7B.

Table 7A. XRD Pattern of SCM-41 Molecular Sieve Obtained in Example 10

| 2θ (°) | d-spacing (Å) | Relative Intensity (%) $(I/I_0)\times100$ |
|---|---|---|
| 8.16 | 10.82 | 100 |
| 8.86 | 9.98 | 3.2 |
| 10.07 | 8.78 | 13.7 |
| 11.64 | 7.60 | 1.3 |
| 12.27 | 7.21 | 18 |
| 13.08 | 6.76 | 2.5 |
| 14.21 | 6.23 | 2 |
| 15.45 | 5.73 | 1.8 |
| 16.39 | 5.40 | 0.7 |
| 17.43 | 5.08 | 1.7 |
| 19.41 | 4.57 | 4.8 |
| 20.57 | 4.32 | 3.4 |
| 21.76 | 4.08 | 11.1 |
| 23.23 | 3.83 | 1.9 |
| 23.94 | 3.71 | 2.6 |
| 24.70 | 3.60 | 3.4 |
| 26.34 | 3.38 | 6.1 |
| 28.31 | 3.15 | 4.8 |
| 28.72 | 3.11 | 4.8 |
| 30.11 | 2.97 | 3.5 |

Table 7B. XRD Pattern of As-Synthesized Molecular Sieve Obtained in Example 10

| 2θ (°) | d-spacing (Å) | Relative Intensity (%) $(I/I_0)\times100$ |
|---|---|---|
| 8.07 | 10.95 | 100 |
| 8.93 | 9.89 | 5.8 |
| 9.94 | 8.90 | 26.2 |
| 11.40 | 7.76 | 2.3 |
| 12.21 | 7.24 | 44.7 |
| 15.31 | 5.78 | 3.2 |
| 16.23 | 5.46 | 3.4 |
| 17.30 | 5.12 | 2.8 |
| 19.17 | 4.63 | 19.4 |

(continued)

| 2θ (°) | d-spacing (Å) | Relative Intensity (%) $(I/I_0)\times100$ |
|---|---|---|
| 20.39 | 4.35 | 8.4 |
| 21.63 | 4.11 | 34.3 |
| 23.24 | 3.82 | 4.5 |
| 23.99 | 3.71 | 2.2 |
| 24.64 | 3.61 | 13.6 |
| 26.11 | 3.41 | 10.4 |
| 27.98 | 3.19 | 14.1 |
| 28.49 | 3.13 | 13.8 |
| 29.98 | 2.98 | 4.9 |

Table 8. Molar Ratios of Raw Materials for Preparing Molecular Sieves Used in the Examples

| Item | $SiO_2/GeO_2$ | Q/(Si+Ge) | F/(Si+Ge) | $H_2O$/(Si+Ge) | X | X/(Si+Ge) |
|---|---|---|---|---|---|---|
| Example 1 | 2.5 | 0.5 | 0.75 | 7 | / | / |
| Example 2 | 5 | 0.5 | 1.5 | 7 | / | / |
| Example 3 | 2 | 0.5 | 1 | 10.5 | / | / |
| Example 4 | 4 | 0.75 | 1.5 | 8.5 | / | / |
| Example 5 | 10 | 1 | 1.5 | 6 | / | / |
| Example 6 | 3 | 0.8 | 1.6 | 8 | / | / |
| Example 7 | 7.5 | 0.6 | 1.8 | 7.5 | / | / |
| Example 8 | 2.5 | 0.5 | 1 | 9.5 | Ti | 0.025 |
| Example 9 | 5 | 0.5 | 1.5 | 7.8 | Al | 0.01 |
| Example 10 | 2.5 | 0.5 | 1 | 15 | Al | 0.1 |

**Comparative Example 1**

5.45 g of tris(dimethylaminopropyl)amine was uniformly mixed with 1.57 g of water, 1.2 g of germanium oxide was added, 4.29 g of Ludox silica sol ($SiO_2$ 40 wt%) was slowly added under stirring, and stirring was continued at room temperature for 4 h. Finally, 1.5 g of hydrofluoric acid (40 wt%) was added, stirring was continued for 1 hour, and then the above mixture was charged into a crystallization kettle with a polytetrafluoroethylene liner and placed in an oven at 155°C for crystallization for 168 hours. After the reaction, the solid was filtered, washed with distilled water, and dried at 100°C to obtain an as-made powder solid of as-synthesized molecular sieve. This as-made powder solid was placed in a muffle furnace and calcined at 550°C for 5 hours to obtain a BEC molecular sieve. The XRD pattern of the obtained BEC molecular sieve is shown in Figure 11.

**Application Example 1**

2 grams of the SCM-41 molecular sieve synthesized in Example 1 were thoroughly mixed with 1.6 grams of pseudo-boehmite and 0.2 grams of sesbania gum powder. 5 ml of 5 wt% nitric acid was added for kneading and extrusion molding into strips of φ1.6×2 mm. The strips were then dried at 120°C and calcined at 550°C in an air atmosphere for 3 hours to prepare an SCM-41 molecular sieve composition.

**Testing Example 1**

2 grams of the SCM-41 molecular sieve synthesized in Example 1 or the SCM-41 molecular sieve composition prepared in Example 12 were poured into a 100 ml weighing bottle, which was immediately covered with a bottle cap and weighed. Then the bottle cap was opened, and the bottle was placed in a desiccator containing a saturated aqueous

sodium chloride solution (about 1000 ml). Adsorption was carried out at a constant temperature of 30-35°C for 24 hours. The desiccator cap was opened. The weighing bottle was immediately covered with the weighing bottle cap and weighed (accurate to 0.2 mg). The static adsorption capacity of the molecular sieve on water was calculated according to the following formula, and the results are listed in Table 9:

Adsorption Capacity = (Weight of sample after adsorption - Initial weight of sample) / Initial weight of sample × 100%.

Referring to the above method, 4A, ZSM-5, Beta, and NaY molecular sieves were tested. The obtained static adsorption capacities on water are also listed in Table 9.

**Testing Example 2**

2 grams of the SCM-41 molecular sieve synthesized in Example 1 or the SCM-41 molecular sieve composition prepared in Example 12 were poured into a 100 ml weighing bottle, which was immediately covered with a bottle cap and weighed. Then the bottle cap was opened, and the bottle was placed in a desiccator connected to a vacuum pump. The pressure inside the desiccator was reduced by suction to below 1000 Pa. The valve of vacuum pump was closed, and the valve for organic adsorbate was opened to connect the organic adsorbate to the desiccator. Adsorption was carried out under the saturated vapor pressure of the organic adsorbate at 30-35°C for 24 hours. The valve for organic adsorbate was closed, the desiccator was vented, then the desiccator cap was opened. The weighing bottle was immediately covered with the weighing bottle cap and weighed (accurate to 0.2 mg). The static adsorption capacity of the molecular sieve on organic matter was calculated according to the following formula, and the results are listed in Table 9:

Adsorption Capacity = (Weight of sample after adsorption - Initial weight of sample) / Initial weight of sample × 100%.

Referring to the above method, 4A, ZSM-5, Beta, and NaY molecular sieves were tested. The obtained static adsorption capacities on organic matter are also listed in Table 9.

Table 9. Static Adsorption Capacities of Different Adsorbents on Water and Organic Matter

| | Adsorption Capacity, % | | | | |
|---|---|---|---|---|---|
| Adsorbent | $H_2O$ | Methanol | n-Hexane | Cyclohexane | Toluene |
| SCM-41 molecular sieve | 15.1 | 12.6 | 1.2 | 0.8 | 3.3 |
| SCM-41 molecular sieve composition | 17.6 | 16.4 | 1.1 | 1.0 | 3.8 |
| 4A molecular sieve | 12.5 | 7.2 | 0.9 | 0.6 | 2.3 |
| ZSM-5 molecular sieve | 13.2 | 11.8 | 1.5 | 0.7 | 2.9 |
| Beta molecular sieve | 16.4 | 13.5 | 1.9 | 1.8 | 4.4 |
| NaY molecular sieve | 17.2 | 13.9 | 2.2 | 2.5 | 4.9 |

From Table 9 above, it can be seen that the SCM-41 molecular sieve and the composition thereof according to the present invention can be used as adsorbents for many organic small molecules and water, especially exhibiting good adsorption performance for $H_2O$.

The preferred embodiments of the present application are described in detail above. However, the present application is not limited thereto. Within the technical concept of the present application, a variety of simple modifications can be made to the technical solutions of the present application, including combining various technical features in any other suitable manner. These simple modifications and combinations should also be considered as disclosed in the present application and all fall within the scope of protection of the present application.

## Claims

**1.** A silicon-germanium molecular sieve, wherein the molecular sieve has an X-ray diffraction pattern exhibiting X-ray diffraction peaks as shown in the table below:

| 2θ (°) | d-spacing (Å) |
|---|---|
| 8.15 ±0.3 | 10.91 ±0.40 |
| 10.06 ±0.3 | 8.83 ±0.30 |
| 12.27 ±0.3 | 7.24 ±0.25 |
| 15.38 ±0.3 | 5.78 ±0.20 |
| 19.29 ±0.3 | 4.61 ±0.15 |
| 20.55 ±0.3 | 4.33 ±0.10 |
| 21.64 ±0.3 | 4.11 ±0.10 |

**2.** The silicon-germanium molecular sieve according to claim 1, exhibiting X-ray diffraction peaks as shown in the table below:

| 2θ (°) | d-spacing (Å) |
|---|---|
| 8.15 ±0.3 | 10.91 ±0.40 |
| 10.06 ±0.3 | 8.83 ±0.30 |
| 12.27 ±0.3 | 7.24 ±0.25 |
| 13.05 ±0.3 | 6.68 ±0.25 |
| 15.38 ±0.3 | 5.78 ±0.20 |
| 19.29 ±0.3 | 4.61 ±0.15 |
| 20.55 ±0.3 | 4.33 ±0.10 |
| 21.64 ±0.3 | 4.11 ±0.10 |

**3.** The silicon-germanium molecular sieve according to claim 1 or 2, wherein the X-ray diffraction pattern of the molecular sieve further exhibits one or more X-ray diffraction peaks as shown in the table below:

| 2θ (°) | d-spacing (Å) |
|---|---|
| 8.78 ±0.3 | 10.12 ±0.35 |
| 11.53 ±0.3 | 7.70 ±0.30 |
| 14.19 ±0.3 | 6.26 ±0.20 |
| 16.35 ±0.3 | 5.43 ±0.20 |
| 17.34 ±0.3 | 5.12 ±0.15 |
| 23.22 ±0.3 | 3.84 ±0.08 |

**4.** The silicon-germanium molecular sieve according to any one of claims 1-3, wherein the X-ray diffraction pattern of the molecular sieve further exhibits one or more X-ray diffraction peaks as shown in the table below:

| 2θ (°) | d-spacing (Å) |
|---|---|
| 23.86 ±0.3 | 3.73 ±0.08 |
| 24.74 ±0.3 | 3.60 ±0.05 |
| 26.22 ±0.3 | 3.40 ±0.05 |
| 28.15 ±0.3 | 3.17 ±0.03 |
| 28.60 ±0.3 | 3.12 ±0.03 |
| 30.04 ±0.3 | 2.98 ±0.03 |

**5.** The silicon-germanium molecular sieve according to any one of claims 1-4, wherein the X-ray diffraction pattern of the molecular sieve exhibits relative intensity characteristics of diffraction peaks as shown in the table below:

| 2θ (°) | d-spacing (Å) | Relative Intensity $(I/I_0)\times100$ |
|---|---|---|
| 8.15 ±0.3 | 10.91 ±0.40 | vs |
| 10.06 ±0.3 | 8.83 ±0.30 | w-m |
| 12.27 ±0.3 | 7.24 ±0.25 | w-s |
| 13.05 ±0.3 | 6.68 ±0.25 | vw-w |
| 15.38 ±0.3 | 5.78 ±0.20 | vw-w |
| 19.29 ±0.3 | 4.61 ±0.15 | vw-w |
| 20.55 ±0.3 | 4.33 ±0.10 | vw-w |
| 21.64 ±0.3 | 4.11 ±0.10 | w-m |

**6.** The silicon-germanium molecular sieve according to claim 5, wherein the X-ray diffraction pattern further exhibits relative intensity characteristics of diffraction peaks as shown in any one or more rows of the table below:

| 2θ (°) | d-spacing (Å) | Relative Intensity $(I/I_0)\times100$ |
|---|---|---|
| 8.78 ±0.3 | 10.12 ±0.35 | w-m |
| 11.53 ±0.3 | 7.70 ±0.30 | vw-w |
| 14.19 ±0.3 | 6.26 ±0.20 | vw-w |
| 16.35 ±0.3 | 5.43 ±0.20 | vw-w |
| 17.34 ±0.3 | 5.12 ±0.15 | vw-w |
| 23.22 ±0.3 | 3.84 ±0.08 | vw-w |

**7.** The silicon-germanium molecular sieve according to claim 5 or 6, wherein the X-ray diffraction pattern further exhibits relative intensity characteristics of diffraction peaks as shown in any one or more rows of the table below:

| 2θ (°) | d-spacing (Å) | Relative Intensity $(I/I_0)\times100$ |
|---|---|---|
| 23.86 ±0.3 | 3.73 ±0.08 | vw-w |
| 24.74 ±0.3 | 3.60 ±0.05 | vw-w |
| 26.22 ±0.3 | 3.40 ±0.05 | vw-w |
| 28.15 ±0.3 | 3.17 ±0.03 | vw-w |
| 28.60 ±0.3 | 3.12 ±0.03 | vw-w |
| 30.04 ±0.3 | 2.98 ±0.03 | vw-w |

**8.** The silicon-germanium molecular sieve according to any one of claims 1-7, wherein the molecular sieve satisfies at least one of the following conditions (a)-(h):

(a) the molecular sieve has a framework topology comprising natural tiles of $[4^6]$, $[4^4.6^2]$, $[4^2.5^4]$, $[4^2.5^4.6^2]$, $[4^7.5^6.6^9.10^4]$;
(b) the molecular sieve has a framework topology with a minimum repeating unit composed of 2 $[4^6]$, 2 $[4^4.6^2]$, 2 $[4^2.5^4]$, 1 $[4^2.5^4.6^2]$, 2 $[4^7.5^6.6^9.10^4]$ natural tiles;
(c) the molecular sieve has a framework topology comprising natural tiles of $[4^6]$, $[4^4.6^2]$, $[4^2.5^4]$, $[4^2.6^4]$, $[4^{14}.5^8.6^{16}.10^8]$;
(d) the molecular sieve has a framework topology with a minimum repeating unit composed of 2 $[4^6]$, 2 $[4^4.6^2]$, 2 $[4^2.5^4]$, 1 $[4^2.6^4]$, 2 $[4^{14}.5^8.6^{16}.10^8]$ natural tiles;
(e) the molecular sieve has intersecting straight channels with 10-membered ring openings along crystal [010]

and [110] directions,

preferably, the straight channels with 10-membered ring openings have a planar projection in shape of ellipse;
more preferably, the ellipse has a major axis of 6.0-7.0 Å, preferably 6.1-6.9 Å, more preferably 6.2-6.8 Å;
more preferably, the ellipse has a minor axis of 4.4-5.4 Å, preferably 4.5-5.3 Å, more preferably 4.6-5.2 Å;

(f) the molecular sieve belongs to a monoclinic symmetry;

preferably, the molecular sieve has unit cell parameters including a = 17.0-19.0 Å, preferably a = 17.2-18.8 Å, more preferably a = 17.4-18.6 Å;
preferably, the molecular sieve has unit cell parameters including b = 12.6-14.6 Å, preferably b = 12.8-14.4 Å, more preferably b = 13.0-14.2 Å;
preferably, the molecular sieve has unit cell parameters including c = 21.2-23.2 Å, preferably c = 21.4-23.0 Å, more preferably c = 21.6-22.8 Å;
preferably, the molecular sieve has unit cell parameters including $\alpha$ = 90°, $\gamma$ = 90°;
preferably, the molecular sieve has a unit cell parameter of $\beta$ = 96-106°, preferably $\beta$ = 97-105°, more preferably $\beta$ = 98-104°;

(g) the molecular sieve has a specific surface area of 250-1000 $m^2$/g, preferably 300-800 $m^2$/g;
(h) the molecular sieve has a micropore volume of 0.1-0.4 $cm^3$/g, preferably 0.12-0.35 $cm^3$/g.

**9.** The silicon-germanium molecular sieve according to any one of claims 1-8, wherein the molecular sieve has a $SiO_2/GeO_2$ molar ratio of (0.25-25) : 1, preferably (0.5-20) : 1, more preferably (1-15) : 1, even more preferably (1.5-10) : 1.

**10.** The silicon-germanium molecular sieve according to any one of claims 1-9, wherein the molecular sieve further comprises an additional element X selected from boron, aluminum, gallium, titanium, zirconium, hafnium, tin, zinc, iron, chromium, indium, or a combination thereof, preferably selected from aluminum and titanium, preferably at least a portion of the additional element X is present in the form of an oxide;
preferably, calculated on a molar basis of elements, the ratio of the total molar content of Si element and Ge element to the total molar content of all additional elements X in the molecular sieve is greater than or equal to 5, preferably greater than or equal to 10, more preferably 10-100.

**11.** The silicon-germanium molecular sieve according to claim 1, having a schematic chemical composition represented by formula "$kF \cdot mQ \cdot SiO_2 \cdot 1/nGeO_2 \cdot pH_2O$" or "$kF \cdot mQ \cdot SiO_2 \cdot 1/nGeO_2 \cdot q\ XO_{y/2} \cdot pH_2O$", wherein Q is an organic template, X represents an element selected from boron, aluminum, gallium, titanium, zirconium, hafnium, tin, zinc, iron, chromium, indium, or a combination thereof, preferably selected from aluminum and titanium, y is a valence of element X, and is in a range of 1-7, wherein,

$0.25 \le n \le 25$, preferably $0.5 \le n \le 20$, more preferably $1 \le n \le 15$, particularly preferably $1.5 \le n \le 10$;
$0.05 \le k \le 1.0$, preferably $0.05 \le k \le 0.5$, more preferably $0.1 \le k \le 0.5$, particularly preferably $0.1 \le k \le 0.4$;
$0.01 \le m \le 1.0$, preferably $0.02 \le m \le 0.5$, more preferably $0.05 \le m \le 0.5$, particularly preferably $0.05 \le m \le 0.3$;
$0.005 \le p \le 0.5$, preferably $0.01 \le p \le 0.4$, more preferably $0.01 \le p \le 0.3$, particularly preferably $0.02 \le p \le 0.2$;
$0 \le q \le (1+1/n)/5$, preferably $0 \le q \le (1+1/n)/10$, more preferably $(1+1/n)/100 \le q \le (1+1/n)/10$;
the organic template Q comprises or consists of 1-[bis[3-(dimethylamino)propyl]amino]-2-propanol,
preferably, the X-ray diffraction pattern of the silicon-germanium molecular sieve further exhibits one or more X-ray diffraction peaks as shown in the table below:

| 2θ (°) | d-spacing (Å) |
|---|---|
| 8.78 ±0.3 | 10.12 ±0.35 |
| 11.53 ±0.3 | 7.70 ±0.30 |
| 16.35 ±0.3 | 5.43 ±0.20 |
| 17.34 ±0.3 | 5.12 ±0.15 |
| 23.22 ±0.3 | 3.84 ±0.08 |

further preferably, the X-ray diffraction pattern of the silicon-germanium molecular sieve further exhibits one or more X-ray diffraction peaks as shown in the table below:

| 2θ (°) | d-spacing (Å) |
|---|---|
| 23.86 ±0.3 | 3.73 ±0.08 |
| 24.74 ±0.3 | 3.60 ±0.05 |
| 26.22 ±0.3 | 3.40 ±0.05 |
| 28.15 ±0.3 | 3.17 ±0.03 |
| 28.60 ±0.3 | 3.12 ±0.03 |
| 30.04 ±0.3 | 2.98 ±0.03 |

**12.** The silicon-germanium molecular sieve according to claim 11, wherein the X-ray diffraction pattern of the molecular sieve exhibits relative intensity characteristics of diffraction peaks as shown in the table below:

| 2θ (°) | d-spacing (Å) | Relative Intensity $(I/I_0)\times100$ |
|---|---|---|
| 8.15 ±0.3 | 10.91 ±0.40 | vs |
| 10.06 ±0.3 | 8.83 ±0.30 | w-m |
| 12.27 ±0.3 | 7.24 ±0.25 | m-s |
| 15.38 ±0.3 | 5.78 ±0.20 | vw-w |
| 19.29 ±0.3 | 4.61 ±0.15 | w-m |
| 20.55 ±0.3 | 4.33 ±0.10 | vw-w |
| 21.64 ±0.3 | 4.11 ±0.10 | w-s |

preferably, the X-ray diffraction pattern of the molecular sieve further exhibits relative intensity characteristics of diffraction peaks as shown in any one or more rows of the table below:

| 2θ (°) | d-spacing (Å) | Relative Intensity $(I/I_0)\times100$ |
|---|---|---|
| 8.78 ±0.3 | 10.12 ±0.35 | vw-w |
| 11.53 ±0.3 | 7.70 ±0.30 | vw-w |
| 16.35 ±0.3 | 5.43 ±0.20 | vw-w |
| 17.34 ±0.3 | 5.12 ±0.15 | vw-w |
| 23.22 ±0.3 | 3.84 ±0.08 | vw-w |

further preferably, the X-ray diffraction pattern of the molecular sieve further exhibits relative intensity characteristics of diffraction peaks as shown in any one or more rows of the table below:

| 2θ (°) | d-spacing (Å) | Relative Intensity $(I/I_0)\times100$ |
|---|---|---|
| 23.86 ±0.3 | 3.73 ±0.08 | vw-w |
| 24.74 ±0.3 | 3.60 ±0.05 | vw-w |
| 26.22 ±0.3 | 3.40 ±0.05 | vw-w |
| 28.15 ±0.3 | 3.17 ±0.03 | vw-w |
| 28.60 ±0.3 | 3.12 ±0.03 | vw-w |

(continued)

| 2θ (°) | d-spacing (Å) | Relative Intensity $(I/I_0)\times 100$ |
|---|---|---|
| 30.04 ±0.3 | 2.98 ±0.03 | vw-w |

**13.** A method for preparing the silicon-germanium molecular sieve according to any one of claims 1-12, comprising steps of mixing a silicon source, a germanium source, a fluorine source, an organic template Q, water, and optionally an additional element X source; subjecting to a crystallization reaction; and optionally calcining, to obtain the silicon-germanium molecular sieve, wherein the organic template Q comprises or consists of 1-[bis[3-(dimethylamino)propyl]amino]-2-propanol.

**14.** The preparation method according to claim 13, having one or more of the following features:

the silicon source is selected from water glass, silica sol, solid silica gel, fumed silica, amorphous silica, diatomaceous earth, zeolite molecular sieve, tetraethyl orthosilicate, or a combination thereof;
the germanium source is selected from germanium oxide, germanium nitrate, tetraalkoxygermanium, or a combination thereof;
the fluorine source is selected from hydrofluoric acid, ammonium fluoride, sodium fluoride, potassium fluoride, or a combination thereof, preferably selected from hydrofluoric acid and ammonium fluoride; and
the additional element X source is selected from a boron source, an aluminum source, a gallium source, a titanium source, a zirconium source, a hafnium source, a tin source, a zinc source, an iron source, a chromium source, an indium source, or a combination thereof; preferably selected from a boron oxide source, an aluminum oxide source, a gallium oxide source, a titanium oxide source, a zirconium oxide source, a hafnium oxide source, a tin oxide source, a zinc oxide source, an iron oxide source, a chromium oxide source, an indium oxide source, or a combination thereof.

**15.** The preparation method according to claim 13 or 14, having one or more of the following features:

the molar ratio of the amounts of the organic template Q, the silicon source (calculated as $SiO_2$), the germanium source (calculated as $GeO_2$), the fluorine source (calculated as F), and water is (0.15-4) : (0.2-0.97) : (0.03-0.8) : (0.2-4) : (0.5-30), preferably (0.15-4) : (0.2-0.9615) : (0.0385-0.8) : (0.2-4) : (0.5-30), more preferably (0.25-3.5) : (0.3-0.96) : (0.04-0.7) : (0.35-3.5) : (1-25), further preferably (0.3-2.5) : (0.5-0.94) : (0.06-0.5) : (0.4-2.5) : (2-20), even more preferably (0.35-1.5) : (0.6-0.91) : (0.09-0.4) : (0.45-2) : (3-15);
the ratio of the total molar amount of the additional element X source (calculated as element X) to the total molar amount of the silicon source (calculated as $SiO_2$) and germanium source (calculated as $GeO_2$) is (0-0.2) : 1, preferably (0-0.1) : 1, more preferably (0.01-0.01) : 1;
the crystallization reaction is performed under conditions including: a crystallization temperature of 100-200°C, preferably 110-190°C, more preferably 120-180°C; a crystallization time of 24-360 hours, preferably 48-300 hours, more preferably 72-240 hours;
the calcination is performed under conditions including: a calcination temperature of 300-750°C, preferably 400-600°C; a calcination time of 1-10 hours, preferably 3-6 hours.

**16.** A molecular sieve composition comprising the silicon-germanium molecular sieve according to any one of claims 1-12, and an active component and/or a binder, preferably wherein the active component is selected from natural or synthetic zeolites, and the binder is selected from clay, white clay, silica gel, alumina, or a combination thereof.

**17.** Use of the silicon-germanium molecular sieve according to any one of claims 1-12 or the molecular sieve composition according to claim 16 as an adsorbent or a catalyst.

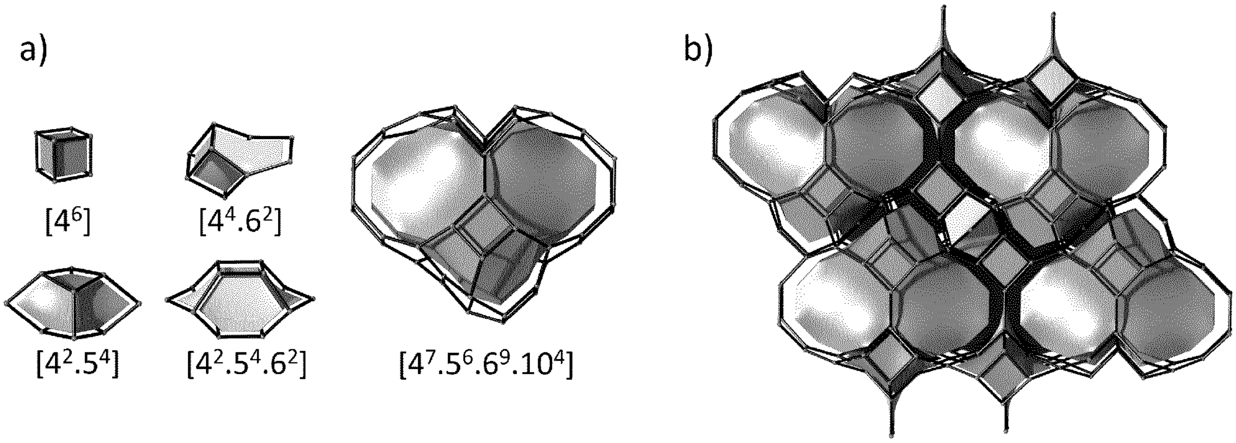


Figure 1

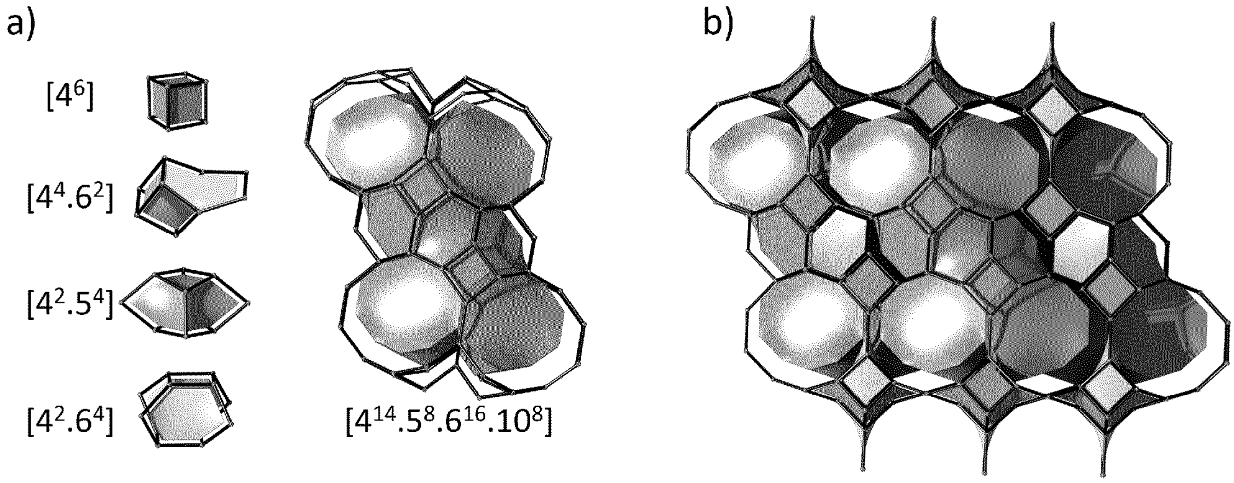


Figure 2

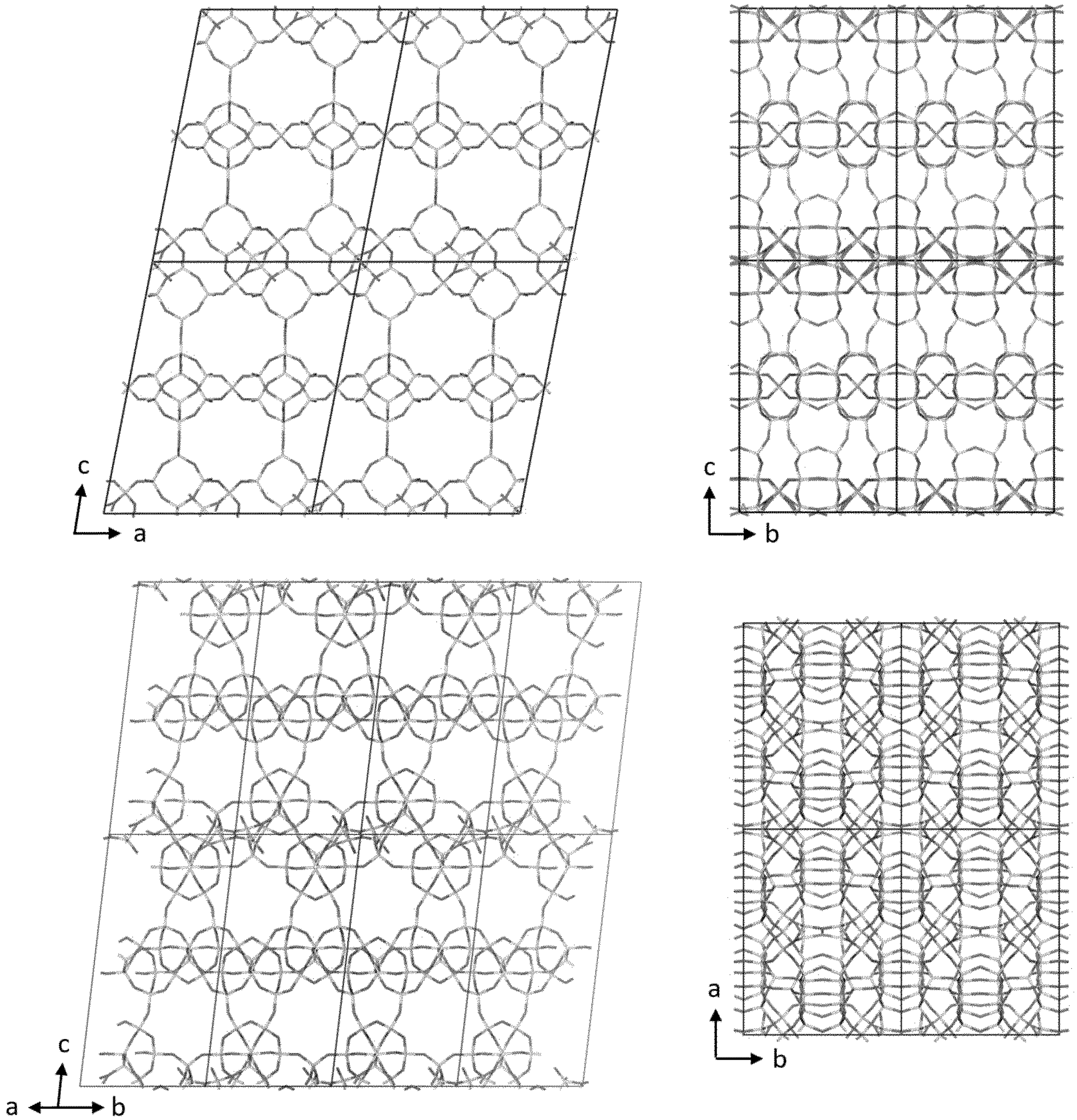


Figure 3

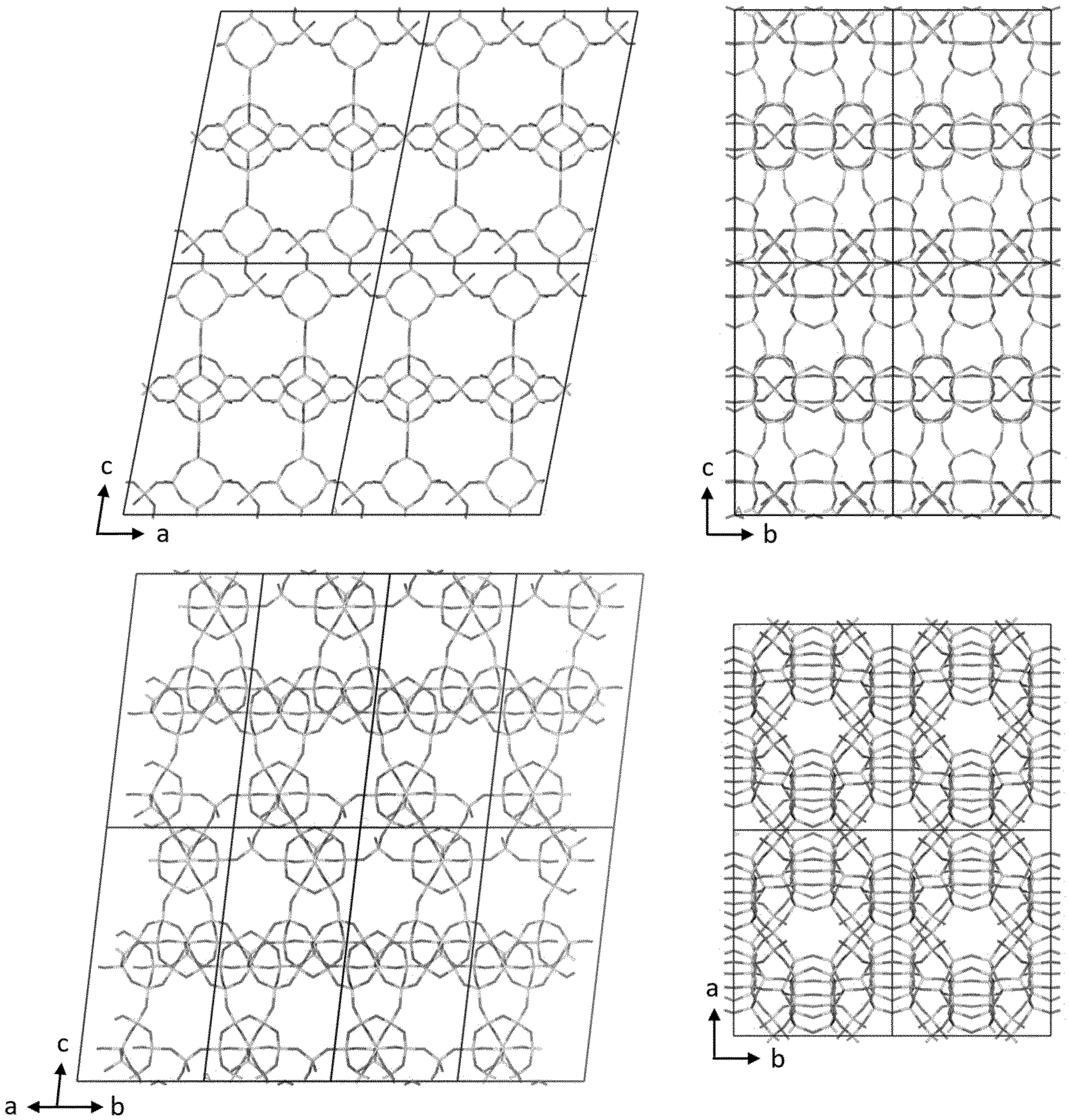


Figure 4

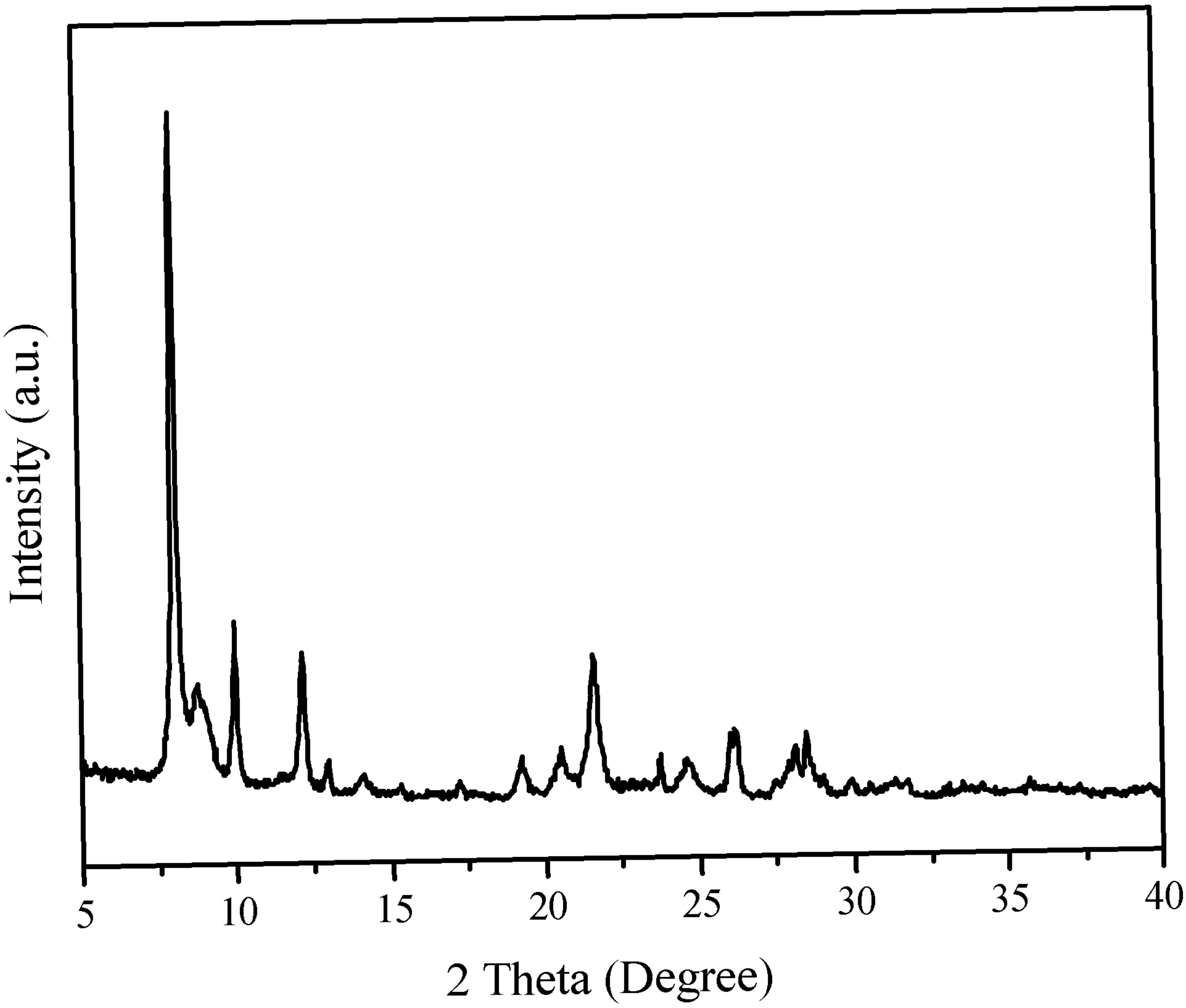


Figure 5A

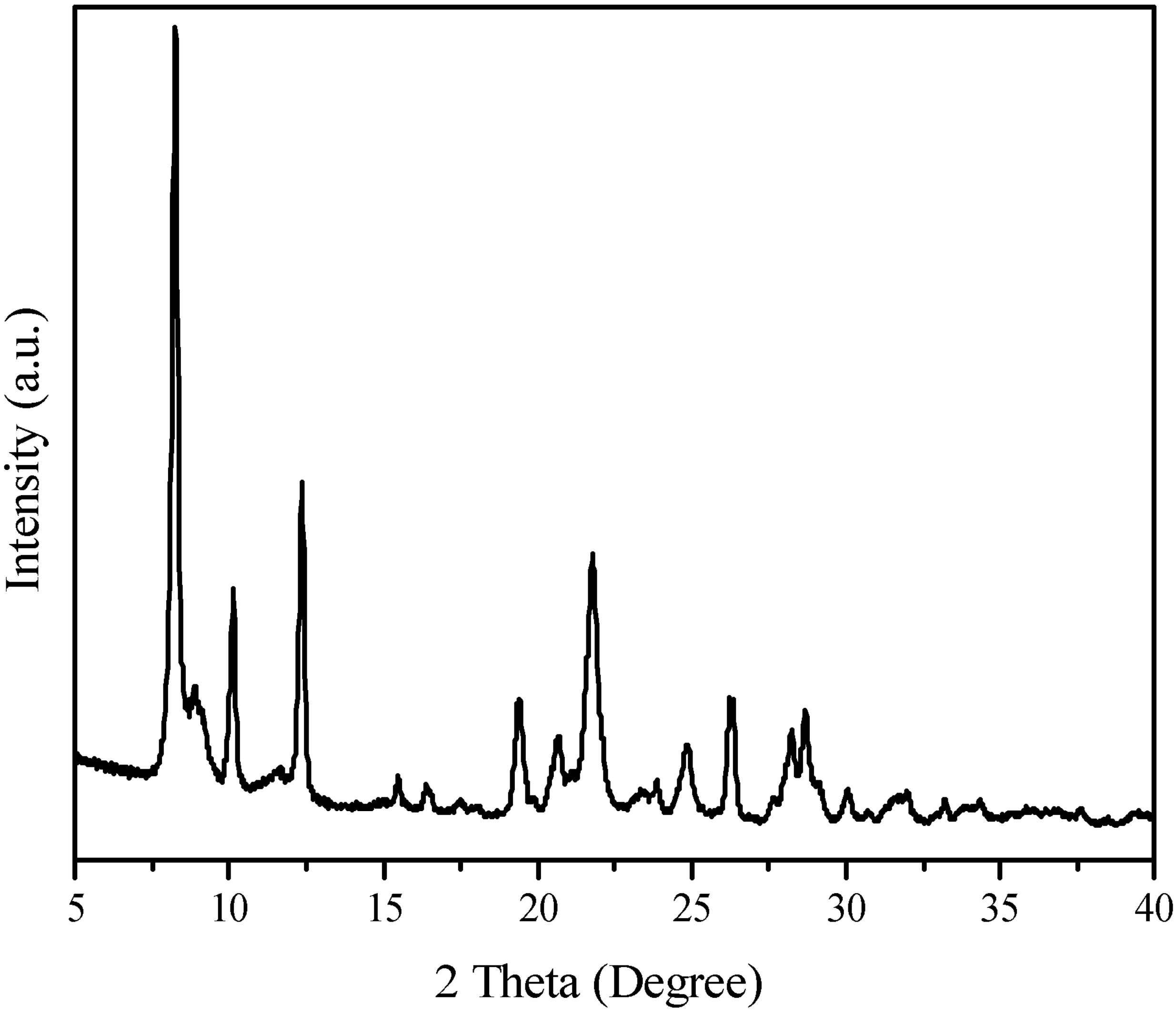


Figure 5B

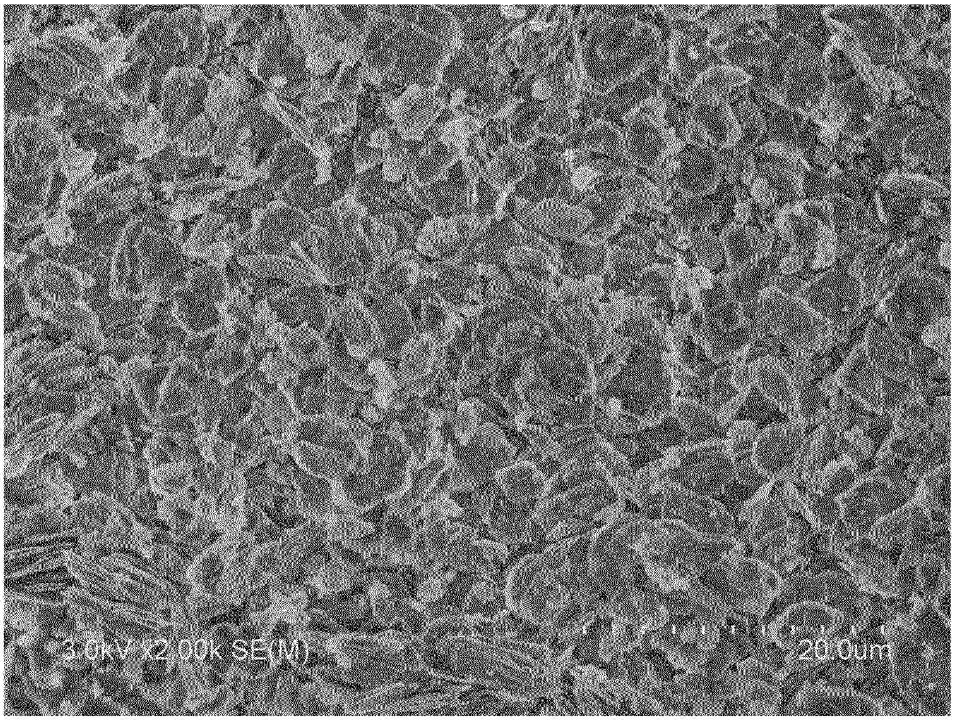


Figure 6

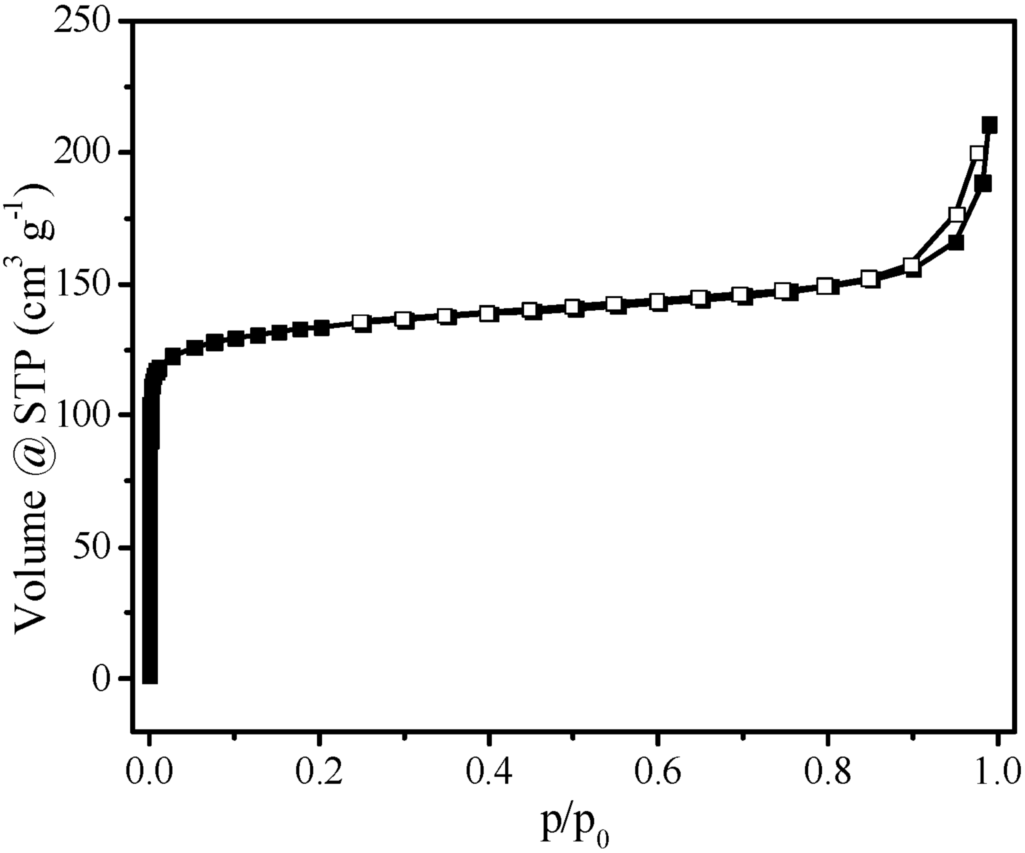


Figure 7

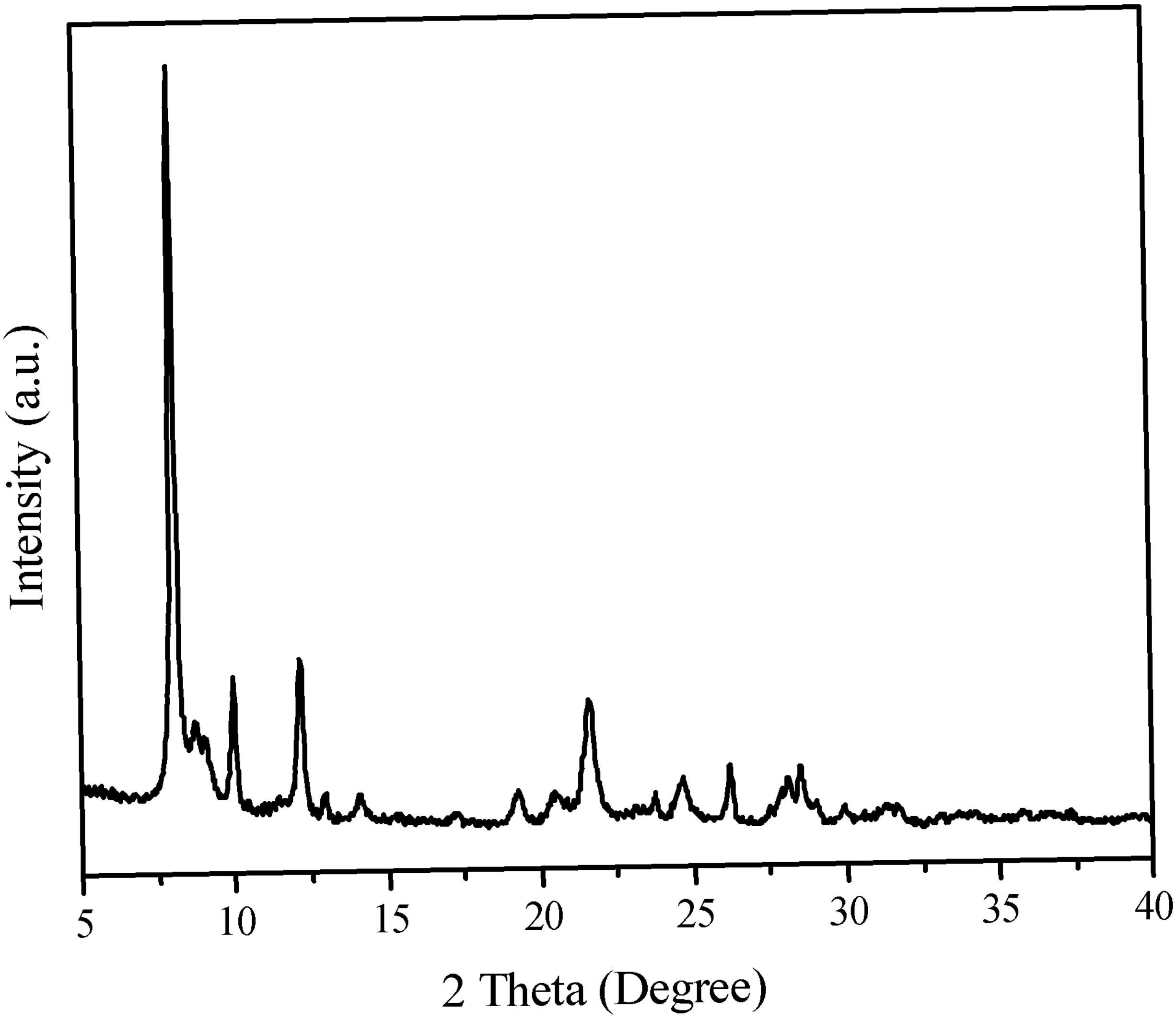


Figure 8A

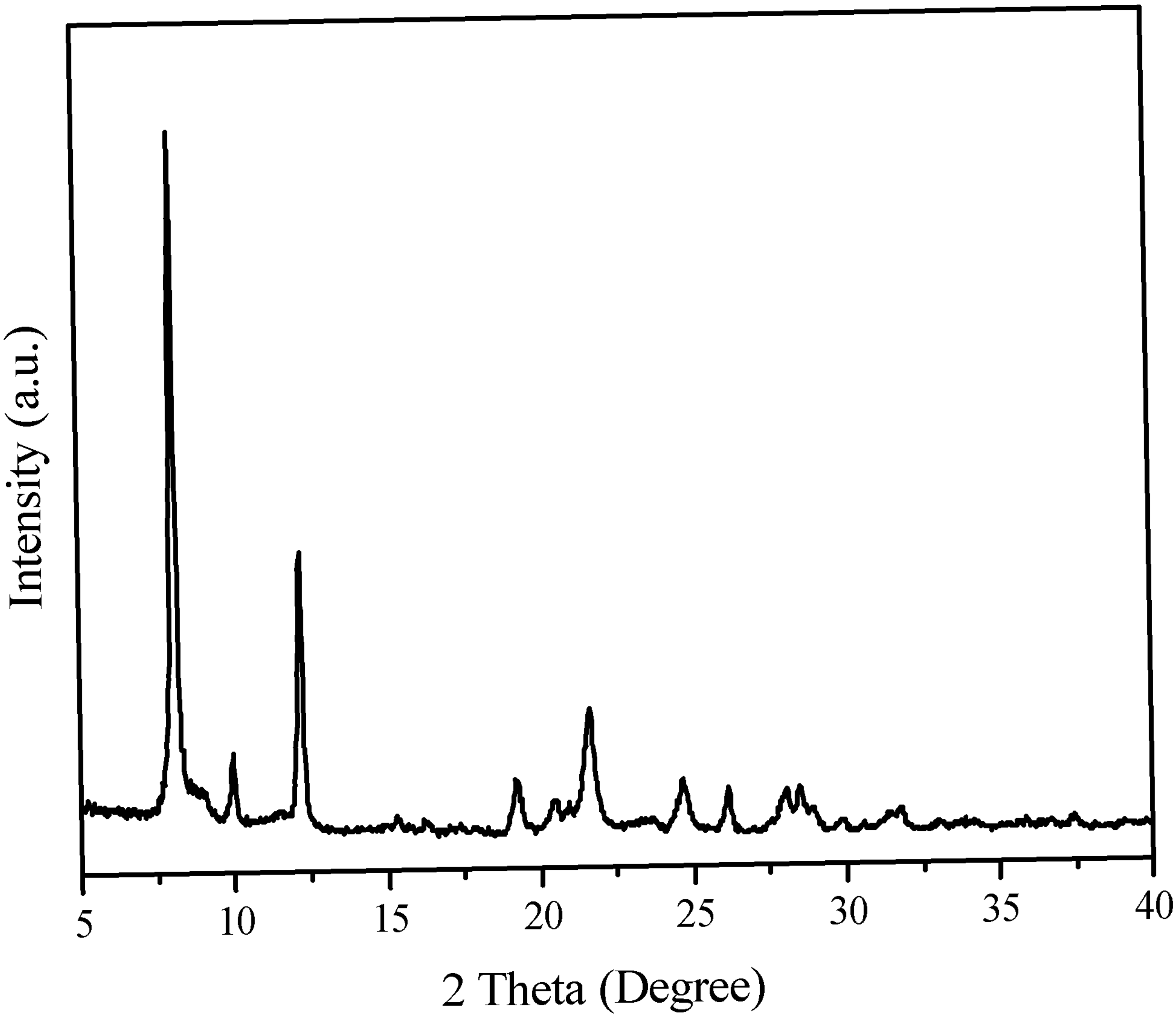


Figure 8B

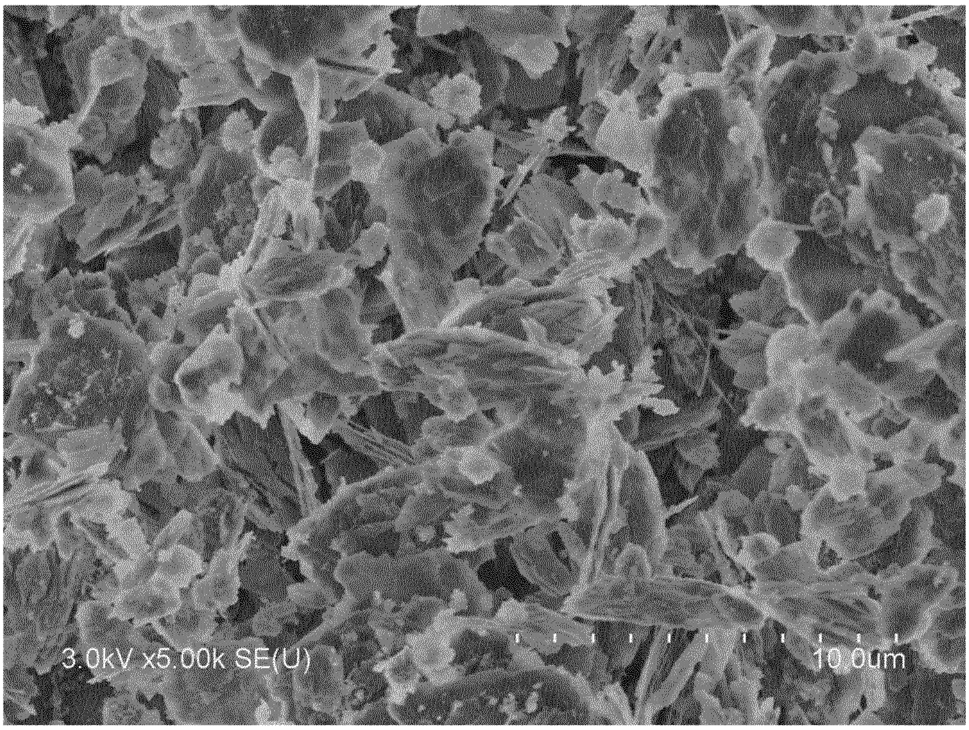


Figure 9

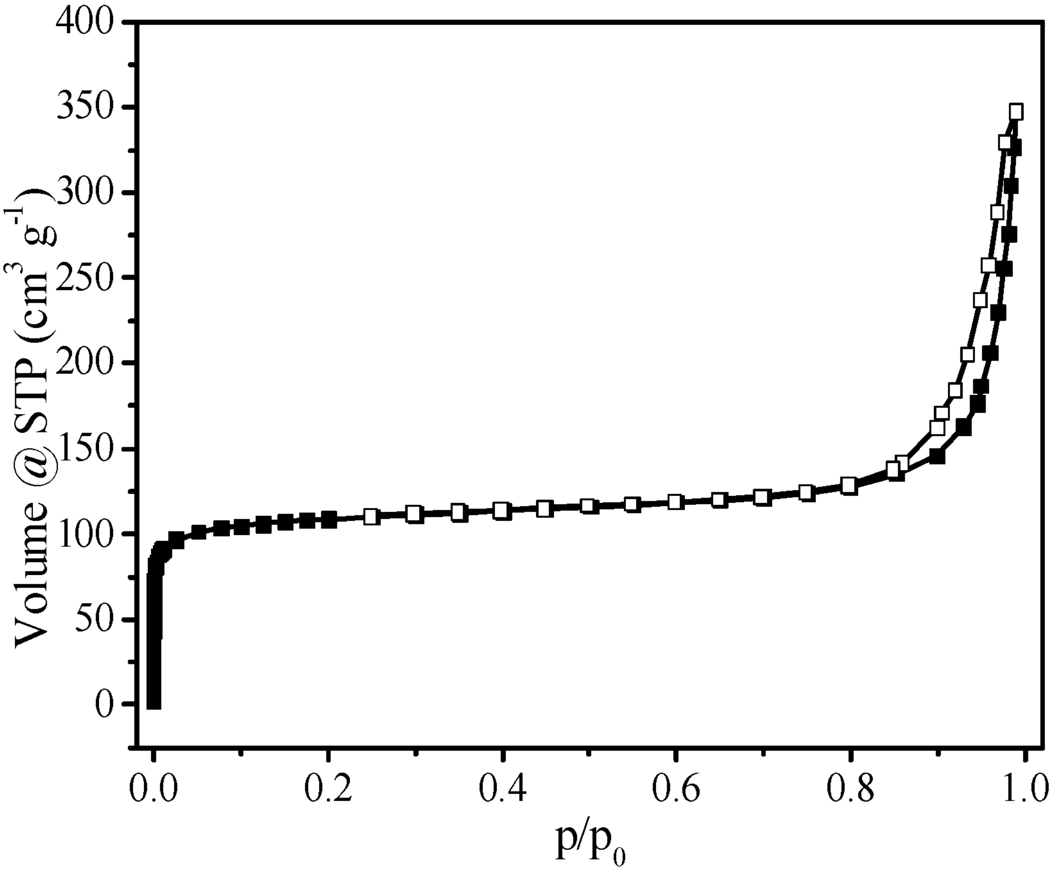


Figure 10

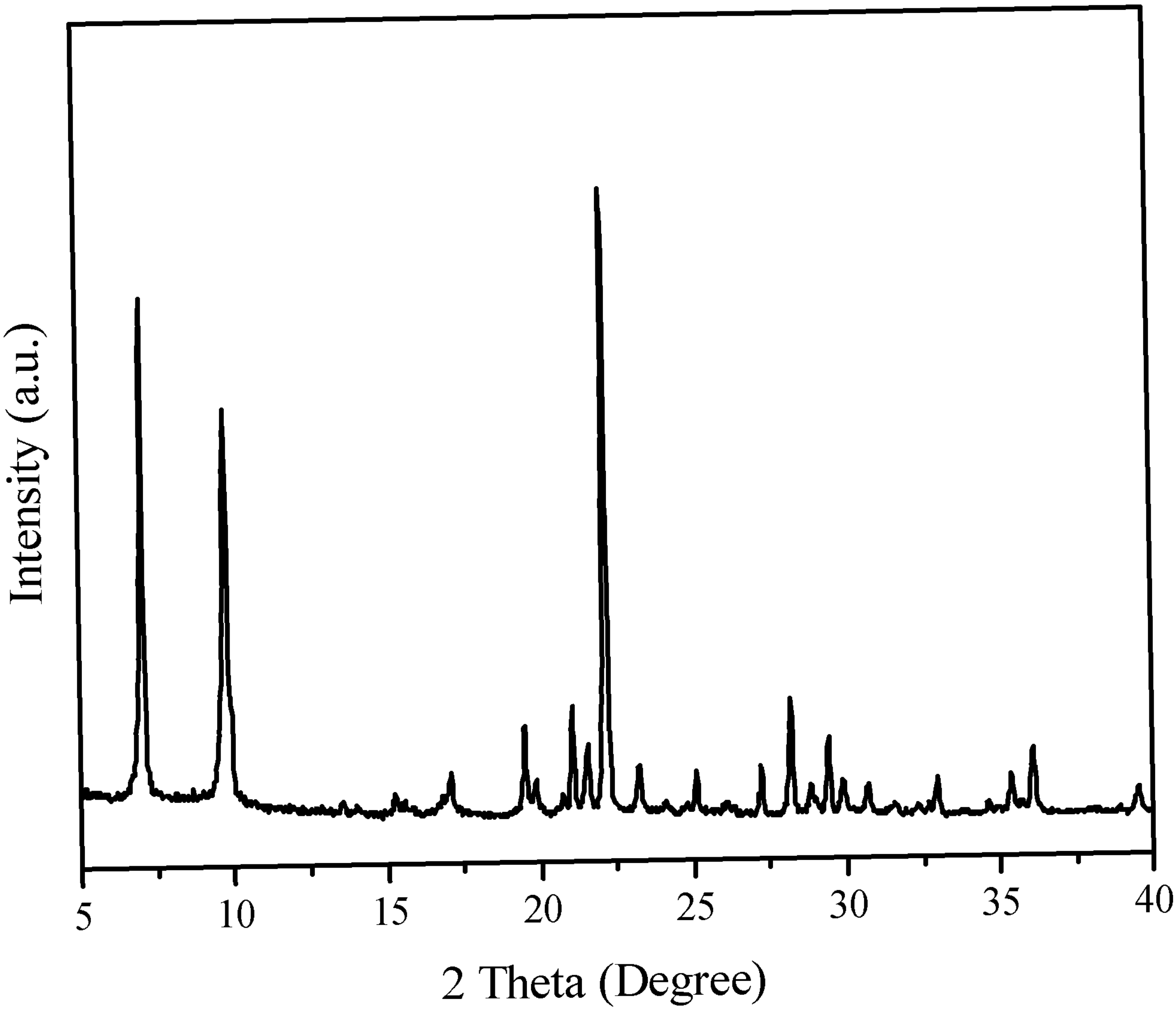


Figure 11

## INTERNATIONAL SEARCH REPORT

International application No.
**PCT/CN2023/141734**

### A. CLASSIFICATION OF SUBJECT MATTER

C01B39/04(2006.01)i; B01J20/18(2006.01)i; B01J29/06(2006.01)i; B01J29/70(2006.01)i

According to International Patent Classification (IPC) or to both national classification and IPC

### B. FIELDS SEARCHED

Minimum documentation searched (classification system followed by classification symbols)

IPC: C01B; B01J

Documentation searched other than minimum documentation to the extent that such documents are included in the fields searched

Electronic data base consulted during the international search (name of data base and, where practicable, search terms used)

CNABS; CNTXT; WPABSC; WPABS; ENTXT; CJFD; DWPI; ENTXTC; VEN; CNKI; STN: 读秀, DUXIU; Elsevier: 中国石油化工股份有限公司, 上海石油化工研究院, 杨为民, 付文华, 罗翼, 邹晓冬, 王振东, 袁志庆, 硅, 锗, 氧化硅, 氧化锗, 分子筛, 沸石, 模板剂, 1-[二[3-(二甲氨基)丙基]氨基]-2-丙醇, 晶化, X射线衍射, 吸附剂, 催化剂, SCM-41, Si, Ge, SiO2, GeO2, Molecular sieve, Zeolite, Template, 1-[Bis[3-(dimethylamino)propyl]amino]-2-propanol, 67151-63-7, Crystallization, XRD, Adsorbent, Catalyst

### C. DOCUMENTS CONSIDERED TO BE RELEVANT

| Category* | Citation of document, with indication, where appropriate, of the relevant passages | Relevant to claim No. |
|---|---|---|
| A | CN 109081359 A (CHINA PETROLEUM & CHEMICAL CORPORATION et al.) 25 December 2018 (2018-12-25)<br>description, paragraphs 69-71, and embodiment 1 | 1-17 |
| A | CN 112206807 A (CHINA PETROLEUM & CHEMICAL CORP. et al.) 12 January 2021 (2021-01-12)<br>entire document | 1-17 |
| A | CN 112239215 A (CHINA PETROLEUM & CHEMICAL CORP. et al.) 19 January 2021 (2021-01-19)<br>entire document | 1-17 |
| A | WO 2007065794 A2 (HOVMOLLER SVEN et al.) 14 June 2007 (2007-06-14)<br>entire document | 1-17 |

☐ Further documents are listed in the continuation of Box C.  ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **29 April 2024** | **01 May 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2023/141734**

| Patent document cited in search report | | | Publication date (day/month/year) | Patent family member(s) | | | Publication date (day/month/year) |
|---|---|---|---|---|---|---|---|
| CN | 109081359 | A | 25 December 2018 | DK | 3640207 | T3 | 11 April 2022 |
| | | | | EP | 3640207 | A1 | 22 April 2020 |
| | | | | EP | 3640207 | B1 | 09 February 2022 |
| | | | | ES | 2910829 | T3 | 13 May 2022 |
| | | | | KR | 20200018453 | A | 19 February 2020 |
| | | | | KR | 102356362 | B1 | 27 January 2022 |
| | | | | PT | 3640207 | T | 14 April 2022 |
| | | | | BR | 112019026405 | A2 | 21 July 2020 |
| | | | | WO | 2018227850 | A1 | 20 December 2018 |
| | | | | US | 2020188891 | A1 | 18 June 2020 |
| | | | | US | 10974967 | B2 | 13 April 2021 |
| | | | | JP | 2020523271 | A | 06 August 2020 |
| | | | | JP | 7094992 | B2 | 04 July 2022 |
| | | | | CN | 109081359 | B | 23 October 2020 |
| | | | | SG | 11201912140 X | A | 30 January 2020 |
| CN | 112206807 | A | 12 January 2021 | CN | 112206807 | B | 06 June 2023 |
| CN | 112239215 | A | 19 January 2021 | CN | 112239215 | B | 27 May 2022 |
| WO | 2007065794 | A2 | 14 June 2007 | None | | | |

Form PCT/ISA/210 (patent family annex) (July 2022)